# EUROPEAN PATENT APPLICATION

(11) **EP 2 998 913 A1**
(43) Date of publication of application: **23.03.2016**
(21) Application number: 15180067.9
(22) Date of filing: 06.08.2015
(51) Int. Cl.: G06Q 10/10

(54) **SCHEDULING METHOD, APPARATUS, AND PROGRAM**

(30) Priority: 22.09.2014 JP 2014193078
(71) Applicant: FUJITSU LIMITED, Kawasaki-shi, Kanagawa 211-8588 (JP)
(72) Inventor: TAIRA, Kei, Kawasaki-shi, Kanagawa 211-8588 (JP); NODA, Masahide, Kawasaki-shi, Kanagawa 211-8588 (JP); MATSUMOTO, Tatsuro, Kawasaki-shi, Kanagawa 211-8588 (JP); TAKE, Riichiro, Kawasaki-shi, Kanagawa 211-8588 (JP); OHNO, Takashi, Kawasaki-shi, Kanagawa 211-8588 (JP)
(74) Representative: Fenlon, Christine Lesley

(57) **Abstract**

An apparatus includes a memory and a processor coupled to the memory and configured to generate a first schedule relating to a plurality of tasks based on a first execution order information of the plurality of tasks prescribed by a plurality of pieces of task information, and generate a second schedule that relates to the plurality of tasks and includes contents different from contents of the first schedule based on a first notification relating to the first schedule.

## Description

The present disclosure relates to an apparatus, a scheduling method, and program.

As an electronic tool configured to keep a behavior schedule of a person recorded therein, a schedule management tool such as an electronic schedule book stored in a personal portable terminal apparatus or a common terminal apparatus that can be accessed by a plurality of people is available. In the electronic schedule book, scheduled start time or scheduled end time of contents of a behavior (hereinafter referred to as "task") to be executed by a user of the electronic schedule book is stored. The user of the electronic schedule book (hereinafter referred to as "task executor") can manage an own schedule by causing contents of the electronic schedule book to be displayed and confirmed, for example, on a display unit of a terminal apparatus. Also a task management tool such as business process management (BPM) that performs management of operation execution, for example, by issuing an instruction for execution of a task generated in a specific operation to a person in charge of the operation has been developed.

As a prior art electronic schedule book, an electronic schedule book that can schedule a plurality of tasks in a field of the same hour of the same date of a timetable is available. In this case, the task executor comes to consider which one of the plurality of tasks set at the same hour of the same date is to be selected, when each of the tasks that are not selected is to be executed and so forth to determine an own behavior. Such consideration and determination are performed on the basis of many factors such as the degree of importance and the execution time limit of each task, the time period used for task execution, the progress situation of a related task, the attribute of a concerned person of the task and so forth. This imposes a fixed burden on the task executor.

On the other hand, if a suitable execution order and execution time periods of a plurality of tasks are automatically set and presented to the task executor on the basis of an execution time limit and so forth set to each of the plurality of tasks, then the burden on the task executor can be reduced. As a prior art document, Japanese Laid-open Patent Publication No. 11-306253, Japanese Laid-open Patent Publication No. 11-238090, Japanese Laid-open Patent Publication No. 11-353360, and Japanese Laid-open Patent Publication No. 2013-196535 are available.

Even if scheduling for a plurality of tasks is performed on the basis of an execution time limit and so forth set to a plurality of tasks, the task executor need not necessarily execute the tasks in order on the basis of a point of view of the execution time limit. For example, in such a case that, in whatever order the task executor executes two tasks, both of the tasks end before the execution time limit, the task executor may want to select an own behavior on the basis of a feeling at the time, a place at which the task executor currently exists and such a situation as with whom the task executor is.

According to an aspect of an embodiment of the invention, an apparatus includes a memory and a processor coupled to the memory and configured to create a first schedule relating to a plurality of tasks on a basis of a first execution order information of the plurality of tasks prescribed by a plurality of pieces of task information, and create a second schedule that relates to the plurality of tasks and has contents different from contents of the first schedule on a basis of a first notification relating to the first schedule.

In aspects of embodiments of the invention, a first schedule for a plurality of tasks is created and, when a notification of the first schedule is issued, a second schedule different from the first schedule is crated. Consequently, the task executor can select a schedule that can satisfy the own desire to a higher degree. The invention is further described, by way of example only, with reference to the following drawings, in which:
FIG. 1 is a block diagram of a system including a scheduling supporting apparatus (information processing apparatus) according to a first embodiment;
FIG. 2 is a block diagram depicting a hardware configuration of a scheduling supporting apparatus in the first embodiment;
FIG. 3 is a block diagram depicting a hardware configuration of a user interface apparatus in the first embodiment;
FIG. 4 is a functional block diagram of a processor included in a scheduling supporting apparatus in the first embodiment;
FIG. 5 is a view exemplifying a flow of processing among a task information source, a scheduling supporting apparatus, and a user interface apparatus in the first embodiment;
FIG. 6A is a view exemplifying contents of task information in the first embodiment;
FIG. 6B is a view exemplifying contents of task information in the first embodiment;
FIG. 7 is a view exemplifying an execution order in the first embodiment;
FIG. 8A is a view exemplifying contents of task information in the first embodiment;
FIG. 8B is a view exemplifying contents of task information in the first embodiment;
FIG. 9 is a view exemplifying contents of a schedule (timetable) in the first embodiment;
FIG. 10 is a view exemplifying contents of a feedback screen image displayed on a user interface apparatus in the first embodiment;
FIG. 11 is a view exemplifying a changed execution order in the first embodiment;
FIG. 12A is a view exemplifying task information on which changed schedule contents are reflected in the first embodiment;
FIG. 12B is a view exemplifying task information on which changed schedule contents are reflected in the first embodiment;
FIG. 13 is a processing flow chart for mediation in the first embodiment;
FIG. 14A is a view exemplifying contents of task information in a second embodiment;
FIG. 14B is a view exemplifying contents of task information in the second embodiment;
FIG. 14C is a view exemplifying contents of task information in the second embodiment;
FIG. 15 is a view exemplifying contents of a feedback screen image displayed on a user interface apparatus in the second embodiment;
FIG. 16 is a functional block diagram of a processor provided in a scheduling supporting apparatus in a third embodiment;
FIG. 17A is a view exemplifying contents of task information in the third embodiment;
FIG. 17B is a view exemplifying contents of task information in the third embodiment;
FIG. 18 is a block diagram depicting a hardware configuration of a user interface apparatus in the third embodiment;
FIG. 19A is a view exemplifying contents of task information in a fourth embodiment;
FIG. 19B is a view exemplifying contents of task information in the fourth embodiment;
FIG. 20 is a processing flow chart for mediation in the fourth embodiment;
FIG. 21 is a block diagram of a system including a scheduling supporting apparatus (information processing apparatus) in a fifth embodiment;
FIG. 22 is a view exemplifying contents of task information in the fifth embodiment;
FIG. 23 is a view depicting a variation of an arrangement position of a schedule storage unit; and
FIG. 24 is a block diagram depicting a hardware configuration of a task information source.

First, the meaning of the terms used in the present specification is described. "Task" is used as a term that can include acts in general performed by a person and can include not only works on business but also private acts such as travel and dining. Also a rest between a plurality of acts, an act to move to a particular place in order to execute a next act and so forth can all be included in the "task." "Task information" signifies information that prescribes contents of a task and can include contents of a particular work, an executor of the task, a period of time taken for execution of the task, a place at which the task is to be executed, a tool to be used in execution of the task and so forth. It is to be noted that the "task information" can include information that specifies or does not specify scheduled start time and scheduled end time of a task. "Scheduling" signifies to set scheduled start time, scheduled end time or both scheduled start time and scheduled end time for a task for which none of scheduled start time and scheduled end time is set or to change and re-set scheduled start time or scheduled end time for a task for which scheduled start time, scheduled end time or both scheduled start time and scheduled end time are set. "Schedule" signifies a schedule that includes information that specifies contents of a task and information that prescribes scheduled start time, scheduled end time or both scheduled start time and scheduled end time for the task. Where a "schedule" is presented in a form in which the schedule can be recognized by a person through a visual sense, an auditory sense, a tactile sense, an olfactory sense or the like, the schedule is referred to as "timetable." Further, "mediation" signifies to specify an execution order of a plurality of tasks to perform scheduling.

### <First Embodiment>

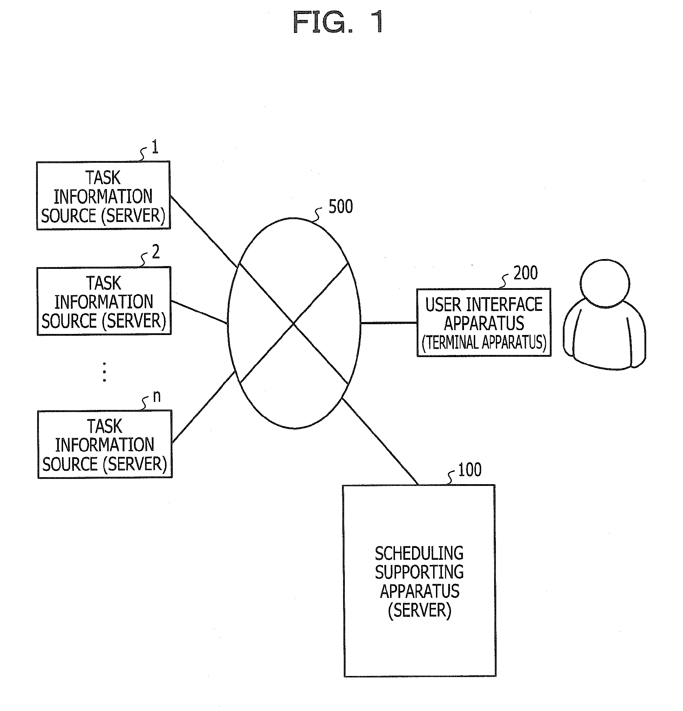

FIG. 1 is a block diagram of a system including a scheduling supporting apparatus according to a first embodiment. A scheduling supporting apparatus 100 performs mediation among a plurality of tasks, changing of a created schedule and so forth. For the scheduling supporting apparatus 100, an information processing apparatus such as a server can be used. Task information sources 1 to n create task information. Each of the task information sources 1 to n is, for example, a business process management (BPM) server. The task information sources 1 to n are coupled to the scheduling supporting apparatus 100 through a network 500, and task information created by any task information source is transmitted to the scheduling supporting apparatus 100.

The scheduling supporting apparatus 100 is coupled to a user interface apparatus 200 through the network 500. The user interface apparatus 200 is an electronic apparatus that can be utilized by an executor of a task. The task executor can recognize contents of a task or contents of a schedule using the user interface apparatus 200. Further, the task executor can request the scheduling supporting apparatus 100 to change contents of a schedule using the user interface apparatus 200. For the user interface apparatus 200, a portable terminal apparatus such as a smartphone, a personal computer (PC) of the notebook type or the desk top type, a personal digital assistant (PDA) or the like can be used. In the following, an outline of operations of the system is described.

First, the task information sources 1 to n create a plurality of pieces of task information for prescribing contents of tasks to be executed by the task executor and transmit the crated information to the scheduling supporting apparatus 100. The scheduling supporting apparatus 100 receives the plurality of pieces of task information transmitted from the task information sources 1 to n and determines an execution order of the plurality of tasks in order to perform mediation among the plurality of tasks. Then, the scheduling supporting apparatus 100 performs mediation regarding scheduled start time or scheduled end time for the plurality of tasks on the basis of the determined execution order. Details of a determination method for an execution order are hereinafter described.

The scheduling supporting apparatus 100 transmits the plurality of pieces of task information and the scheduled start time and scheduled end time of the tasks to the user interface apparatus 200 of the task executor in order to inform the task executor of the schedule created by mediation. The user interface apparatus 200 functions as a mediator between the task executor and the scheduling supporting apparatus 100 in the course of definite determination of the schedule. The task executor can confirm contents of the schedule displayed on a display unit or the like provided in the user interface apparatus 200. Where the task executor considers that it is difficult to execute the tasks in accordance with the contents of the presented schedule or desires presentation of a different schedule, the task executor can perform a changing request for the schedule to the scheduling supporting apparatus 100 through the user interface apparatus 200. An act of the task executor to notify the scheduling supporting apparatus 100 using the user interface apparatus 200 that the task executor agrees with the presented schedule or the task executor requests to change the schedule is referred to as "feedback." Further, information transmitted from the user interface apparatus 200 to the scheduling supporting apparatus 100 by "feedback" is referred to as "feedback information." Details of a method for feedback and feedback information are hereinafter described.

When the scheduling supporting apparatus 100 receives the changing request for the schedule as the feedback information, the scheduling supporting apparatus 100 changes the execution order of the tasks and performs mediation again regarding the tasks on the basis of the changed execution order. Then, the scheduling supporting apparatus 100 transmits the new schedule created by the re-mediation to the user interface apparatus 200. If the task executor agrees with contents of the new schedule, then the user interface apparatus 200 transmits, as the feedback information, a notification that the task executor agrees with the contents of the schedule to the scheduling supporting apparatus 100. The scheduling supporting apparatus 100 obtains the notification that the task executor agrees with the contents of the schedule and definitely determines the scheduled start time and the scheduled end time for the tasks.

In this manner, the scheduling supporting apparatus 100 disclosed herein determines an execution order among a plurality of tasks and performs mediation among the plurality of tasks on the basis of the execution order. Further, the scheduling supporting apparatus 100 does not definitely determine the schedule created on the basis of the execution order as it is but presents the created schedule contents to the task executor. Then, if the task executor does not agree with the schedule contents, the user interface apparatus 200 transmits, as the feedback information, a notification that the task executor does not agree with the schedule contents to the scheduling supporting apparatus 100. The scheduling supporting apparatus 100 changes the execution order to re-create a schedule. Consequently, the scheduling supporting apparatus 100 can create a schedule on which a desire of the task executor is reflected.

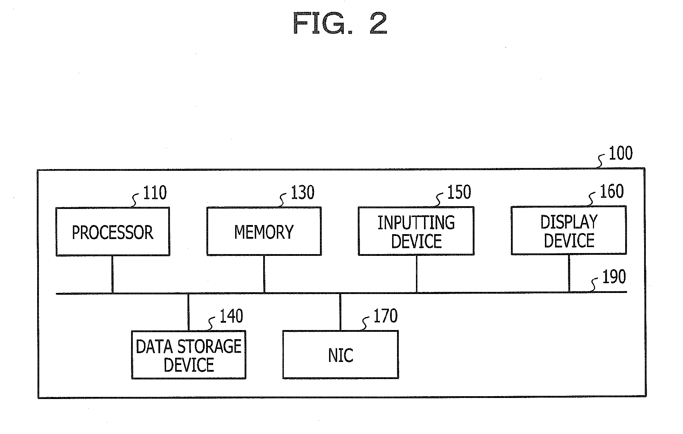

FIG. 2 is a block diagram depicting a hardware configuration of a scheduling supporting apparatus in the first embodiment. The scheduling supporting apparatus depicted in FIG. 2 may be the scheduling supporting apparatus 100 depicted in FIG. 1. The scheduling supporting apparatus 100 includes a processor 110, a memory 130, a data storage device 140, an inputting device 150, a display device 160, a network interface card (NIC) 170 and a bus 190. The processor 110 performs control of the entire scheduling supporting apparatus 100, data processing and so forth. Further, the processor 110 performs mediation among a plurality of tasks received from the task information sources 1 to n, transmission of a created schedule to the user interface apparatus 200, re-mediation based on feedback information received from the user interface apparatus 200 and so forth. The processor 110 is an electronic circuit part such as a central processing unit (CPU), a micro control unit (MCU), a micro processing unit (MPU), a digital signal processor (DSP) or a field programmable gate array (FPGA).

The memory 130 stores therein data to be used for given processing by the processor 110, resulting data of data processing performed by the processor 110 and so forth. The memory 130 is an electronic circuit part including a volatile memory such as a dynamic random access memory (DRAM) or a static random access memory (SRAM) and a nonvolatile memory such as a mask read only memory (mask ROM), a programmable ROM (PROM) or a flash memory. The data storage device 140 stores a computer program to be executed by the processor 110, data to be used for other operation of the scheduling supporting apparatus 100 and so forth. The inputting device 150 is a device that performs inputting of data and so forth to the scheduling supporting apparatus 100. The inputting device 150 includes, for example, a keyboard or a mouse coupled to the scheduling supporting apparatus 100. The display device 160 is a device that displays, for example, a result of processing performed by the processor 110 in such a manner as to be recognizable through a sense of sight and is, for example, a display unit provided on the scheduling supporting apparatus 100. The NIC 170 is a device that performs data communication with a different electronic apparatus or an information processing apparatus such as a server. The data communication may be any of wireless communication and wire communication. The bus 190 couples the devices such as the processor 110, the memory 130, the data storage device 140, the inputting device 150, and the display device 160 and functions as a path for data communication between the devices. It is to be noted that, although it is described that FIG. 2 is a block diagram depicting a hardware configuration of the scheduling supporting apparatus 100, an information processing apparatus having a hardware configuration similar to the hardware configuration described above with reference to FIG. 2 can be used also for the task information sources 1 to n.

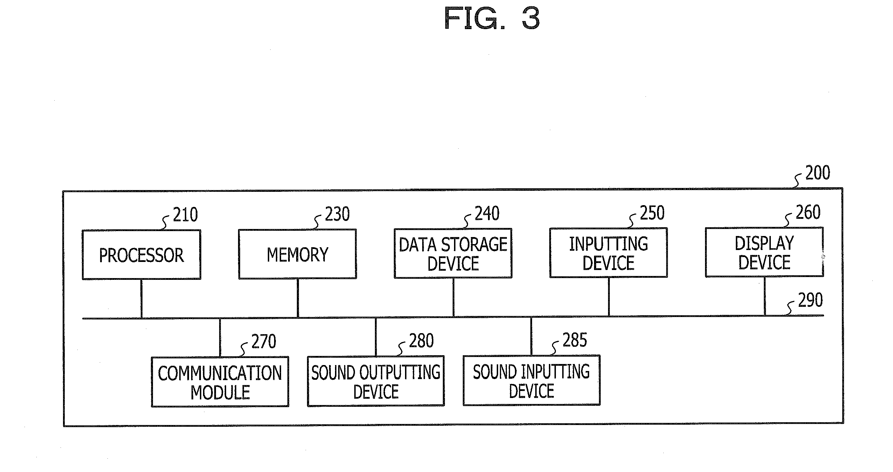

FIG. 3 is a block diagram depicting a hardware configuration of a user interface apparatus in the first embodiment. The user interface apparatus depicted in FIG. 3 may be the user interface apparatus 200 depicted in FIG. 1. The user interface apparatus 200 includes a processor 210, a memory 230, a data storage device 240, an inputting device 250, a display device 260, a communication module 270, a sound outputting device 280, a sound inputting device 285 and a bus 290. The processor 210 performs control of the entire user interface apparatus 200, data processing and so forth. The processor 210 is an electronic circuit part such as a CPU, an MCU, an MPU, a DSP or an FPGA. The memory 230 stores therein data used by the processor 210 to perform given processing, resulting data of data processing performed by the processor 210 and so forth. The memory 230 may function as a schedule storage unit that stores a definitely determined schedule transmitted from the scheduling supporting apparatus 100. The memory 230 is an electronic circuit part such as a DRAM or an SRAM. The data storage device 240 stores a computer program to be executed by the processor 210, data used for other operation of the user interface apparatus 200 and so forth. The data storage device 240 is an electronic circuit part such as a hard disk drive (HDD), a mask ROM, a PROM or a flash memory. The inputting device 250 is a device that performs inputting of data and so forth to the user interface apparatus 200. The inputting device 250 includes, for example, a keyboard, a mouse, a display unit of the touch panel type or the like. The display device 260 is a device that displays, for example, a schedule and so forth transmitted from the scheduling supporting apparatus 100 in such a manner that the task executor can recognize the schedule and so forth through a sense of sight. The display device 260 is, for example, a display unit provided on the user interface apparatus 200. The communication module 270 is a communication device configured to perform data communication with a different electronic apparatus or an information processing apparatus such as a server therethrough. The data communication may be any of wireless communication and wire communication. The communication module 270 includes, for example, a wireless circuit, a baseband circuit, an amplification circuit, an antenna and so forth. The sound outputting device 280 is a device that notifies the task executor, for example, of a schedule and so forth transmitted from the scheduling supporting apparatus 100 by sound and is, for example, a speaker provided on the user interface apparatus 200. Further, the sound inputting device 285 is a device utilized, for example, when the task executor inputs feedback information by sound and is, for example, a microphone provided on the user interface apparatus 200. The bus 290 couples the devices such as the processor 210, the memory 230, the data storage device 240, and the communication module 270 to each other and functions as a path for data communication between the devices therealong.

Now, a determination method for an execution order of a plurality of tasks, a changing method for an execution order when the task executor performs a schedule changing request and so forth are described.

Here, as an example, a case is described in which the task information source 1 creates first task information that prescribes a first task and the task information source 2 creates second task information that prescribes a second task to be executed by a task executor same as the task executor of the first task. Further, it is assumed that a first execution time limit of the first task is prescribed in the first task information and a second execution time limit of the second task is prescribed in the second task information.

The scheduling supporting apparatus 100 that has received the first task information and the second task information determines an execution order of the first task and the second task. For example, if the second execution time limit of the second task is set to date and time earlier than the date and time of the first execution time limit of the first task, then the rank in the execution order of the second task is set higher than the rank in the execution order of the first task. Then, the scheduling supporting apparatus 100 determines scheduled start time and scheduled end time for each task on the basis of the set execution order. In particular, the scheduled start time and scheduled end time of the tasks are determined to create a schedule (hereinafter referred to as first schedule) so that the second task whose rank in the execution order is set higher is executed first and then the first task whose rank in the execution order is set lower is executed later. Further, as a principle, mediation is performed such that a scheduled execution time period for the first task (time period between the scheduled start time and the scheduled end time) and a scheduled execution time period for the second task do not overlap with each other.

The scheduling supporting apparatus 100 transmits the created first schedule to the user interface apparatus 200. If the scheduling supporting apparatus 100 receives a changing request for the schedule as the feedback information to the first schedule, then the scheduling supporting apparatus 100 changes the execution order of the first task and the second task. In the execution order determined when the first schedule is created, the rank of the second task whose execution time limit is set to earlier date and time has been set higher than the rank of the first task. On the other hand, if a changing request for the schedule is received, then the execution order is changed, for example, so that the rank of the first task is higher than the rank of the second task. Then, the scheduling supporting apparatus 100 performs mediation again for the tasks on the basis of the changed execution order. For example, the scheduled start time and the scheduled end time for each task are determined such that the first task whose rank in the execution order is higher is executed first and the second task whose rank in the execution order is lower is executed later. Then, the scheduling supporting apparatus 100 transmits the new schedule (hereinafter referred to as second schedule) created by the second-time mediation to the user interface apparatus 200. If the task executor agrees with contents of the second schedule, then the user interface apparatus 200 issues, as the feedback information, a notification that the task executor agrees with the second schedule to the scheduling supporting apparatus 100. The scheduling supporting apparatus 100 obtains the response of the agreement with the second schedule and definitely determines the scheduled start time and the scheduled end time for the first task and the second task.

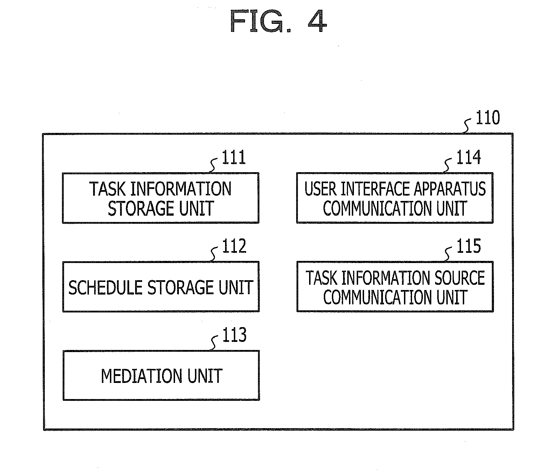

FIG. 4 is a functional block diagram of a processor in the first embodiment. The processor depicted in FIG. 4 may be the processor 110 depicted in FIG. 2. By executing a computer program stored in the data storage device 140 or the like, the processor 110 functions as a task information storage unit 111, a schedule storage unit 112, a mediation unit 113, a user interface apparatus communication unit 114 and a task information source communication unit 115. The task information storage unit 111 stores task information into a specific data storage region such as, for example, the memory 130 or the data storage device 140. It is to be noted that the task information storage unit 111 itself may store and retain task information therein in place of causing some other device such as the memory 130 to store and retain the task information. In the following description, it is assumed that the task information storage unit 111 itself stores and retains the task information therein. The task information stored in the task information storage unit 111 may have been transmitted from the task information sources 1 to n, inputted from the inputting device 150 provided on the scheduling supporting apparatus 100 or transmitted from the user interface apparatus 200. Where the task information is transmitted from the user interface apparatus 200, the task executor itself may create task information, write the task information into the user interface apparatus 200 and request the scheduling supporting apparatus 100 to mediate.

The schedule storage unit 112 stores task information, for which a scheduled execution time period is determined, into a specific data storage region such as, for example, the memory 130 or the data storage device 140. It is to be noted that the schedule storage unit 112 itself may store and retain the schedule therein in place of causing some other device such as the memory 130 to store and retain the schedule information. In the following description, it is assumed that the schedule storage unit 112 itself stores and retains the schedule therein. The task information for which a scheduled execution time period is determined is, for example, task information for which a scheduled execution time period is determined by scheduling performed by the mediation unit 113 hereinafter described from within the task information stored in the task information storage unit 111. Alternatively, the task information for which a scheduled execution time period of the task is determined by the task executor itself and which is stored in a schedule notebook or the like in the user interface apparatus 200 may be acquired and stored by the schedule storage unit 112.

The mediation unit 113 determines a scheduled execution time period for a task in task information. Where a plurality of pieces of task information are involved, an execution order of the plurality of tasks prescribed by the plurality of pieces of task information is specified and mediation among the scheduled execution time periods for the plurality of tasks is performed on the basis of the execution order. Here, "mediation among the scheduled execution time periods for the plurality of tasks" includes not only a case in which mediation among the scheduled execution time periods is performed for the plurality of tasks for which the scheduled execution time period is not determined but also a case in which mediation between the scheduled execution time periods is performed for one task for which the scheduled execution time period is not determined and some other task for which the scheduled execution time period is determined and stored in the schedule storage unit 112. In the latter case, the scheduled execution time period determined already for some other task may be changed as a result of the mediation. It is to be noted that, where only one piece of task information is involved, the mediation unit 113 performs scheduling for the single task to decide a scheduled execution time period without performing mediation.

The user interface apparatus communication unit 114 communicates with the user interface apparatus 200. For example, the user interface apparatus communication unit 114 transmits a schedule for a plurality of tasks created by the mediation unit 113 to the user interface apparatus 200. Where the schedule is created for a plurality of tasks, the user interface apparatus communication unit 114 may not issue a notification of the schedule of all tasks to the user interface apparatus 200. In such a case as just described, the user interface apparatus communication unit 114 may transmit the schedule for at least some of the tasks, for example, a task whose scheduled execution time period is set to the earliest date and time, to the user interface apparatus 200. Further, the user interface apparatus communication unit 114 receives feedback information indicating that the task executor agrees or does not agree with contents of the schedule transmitted to the user interface apparatus 200 from the user interface apparatus 200. When the task executor agrees with the contents of the schedule, the user interface apparatus communication unit 114 may transmit a notification that the scheduled execution time period is definitely determined to the user interface apparatus 200.

The task information source communication unit 115 communicates with the task information sources 1 to n. For example, the task information source communication unit 115 receives task information transmitted from the task information sources 1 to n. Further, after a scheduled execution time period of a task is definitely determined, the task information source communication unit 115 notifies the task information sources 1 to n, which are transmission sources of the corresponding task information, of the definitely determined scheduled execution time period.

It is to be noted that the processor 110 may cause some other circuit different from the processor 110 to execute some functions from among the functions depicted in FIG. 4.

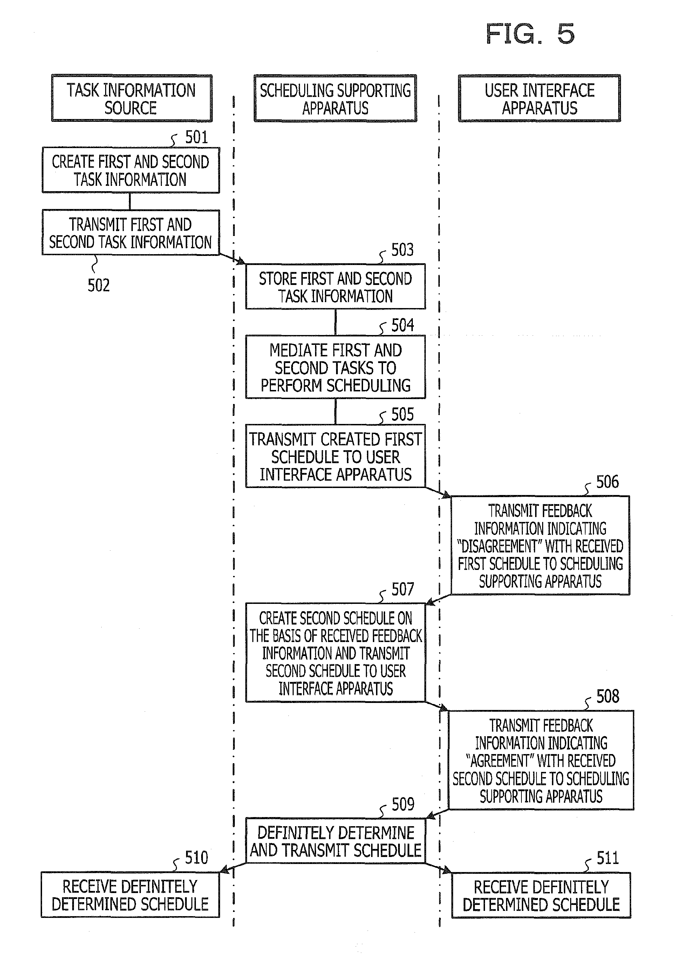

FIG. 5 is a view exemplifying a flow of processing among a task information source, a scheduling supporting apparatus, and a user interface apparatus. The task information source, the scheduling supporting apparatus, and the user interface apparatus described with reference to FIG. 5 may be the task information sources 1 to n, the scheduling supporting apparatus 100, and the user interface apparatus 200, respectively, depicted in FIG. 1. Here, description is given of mediation between the first task and the second task described above as an example.

First, in process 501, the task information sources 1 and 2 create first task information and second task information, respectively. It is to be noted that, in FIG. 5, the task information source 1 and the task information source 2 are collectively depicted as a task information source. In process 502, the task information sources 1 and 2 transmit the created first task information and second task information to the scheduling supporting apparatus 100, respectively. In process 503, the scheduling supporting apparatus 100 stores the first task information and the second task information received from the task information sources 1 and 2. In process 504, the scheduling supporting apparatus 100 performs mediation between the first task indicated by the first task information and the second task indicated by the second task information to create a first schedule in which a scheduled execution time period is determined for each task. In process 505, the scheduling supporting apparatus 100 transmits the created first schedule to the user interface apparatus 200. Here, it is assumed that the task executor inputs a response of "disagreement" with contents of the first schedule to the user interface apparatus 200. In this case, in process 506, the user interface apparatus 200 transmits feedback information indicating "disagreement" inputted by the task executor to the scheduling supporting apparatus 100 in response to the input. In process 507, the scheduling supporting apparatus 100 creates a second schedule having contents different from the contents of the first schedule on the basis of the feedback information received from the user interface apparatus 200 and indicating "disagreement," and transmits the created second schedule to the user interface apparatus 200. If the task executor agrees with the contents of the second schedule and inputs a response of "agreement" to the user interface apparatus 200, then, in process 508, the user interface apparatus 200 transmits feedback information indicating "agreement" to the scheduling supporting apparatus 100. In process 509, the scheduling supporting apparatus 100 definitely determines the scheduled execution time periods for the first task and the second task in accordance with the contents prescribed in the second schedule on the basis of the feedback information received from the user interface apparatus 200 and indicating "agreement," and transmits the definitely determined schedule to the task information sources 1 and 2 and the user interface apparatus 200. In process 510, the task information sources 1 and 2 that are the task information sources can recognize the schedule contents of the task information created thereby by receiving the definitely determined schedule. In process 511, the user interface apparatus 200 receives the definitely determined schedule. Thereafter, the user interface apparatus 200 can perform a process for issuing a notification for urging the task executor to execute the task or a like process, for example, at a timing at which scheduled start time for the task indicated by the schedule comes near.

It is to be noted that, while it is described that two pieces of task information are created at the same time in process 501, the two pieces of task information may be created otherwise at timings different from each other. Further, in process 502, the two pieces of task information may be transmitted to the scheduling supporting apparatus 100 at timings different from each other. For example, the first task information may be transmitted first to the scheduling supporting apparatus 100 whereas the second task information is transmitted to the scheduling supporting apparatus 100 after scheduling for the first task is performed. Also in this case, mediation is performed between the two tasks in process 504.

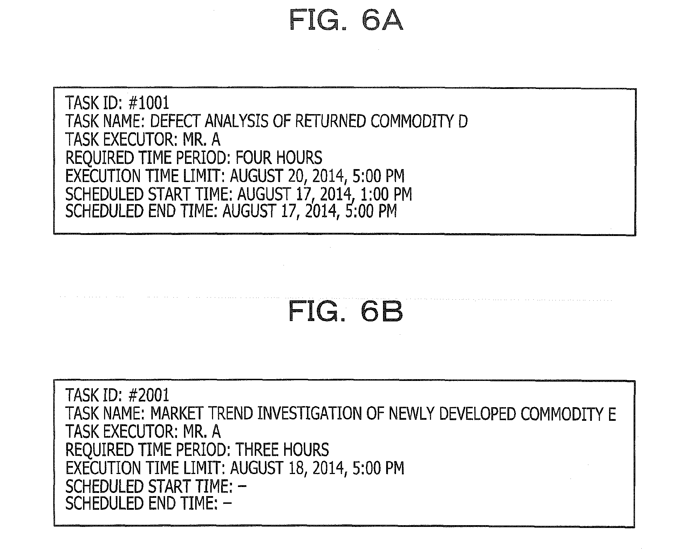

Now, details of the embodiment are described in connection with a particular example of a task. Here, description is given of mediation in a state in which scheduled start time and scheduled end time are prescribed for the first task but scheduled start time and scheduled end time are not yet prescribed for the second task as an example. FIGS. 6A and 6B are views exemplifying prescribed contents of the first task information and the second task information. As depicted in FIG. 6A, a "task ID," a "task name," a "task executor," a "required time period," an "execution time limit," "scheduled start time" and "scheduled end time" are prescribed in the first task information. The "task ID" is information allocated uniquely to each task, and, in the example depicted, the task ID is configured from "#1001" that is a combination of an ID of the task information source 1, for example, "#1," and a number of a task created by the task information source 1, for example, "001." The "task name" is preferably assigned so as to represent task contents concisely so that the task executor can recognize the task contents easily, and, in the example depicted, the task name is "defect analysis of returned commodity D." The "task executor" is information for specifying a person who is to execute the task, and, in the example depicted, "Mr. A" is prescribed as the "task executor." It is to be noted that the name of the task executor need not be prescribed in the "task executor" but a personal ID of the task executor or an ID of the user interface apparatus 200 associated with the task executor may be prescribed. Further, where there is no necessity to particularly designate a personality as the task executor, for example, where the task may be executed by any one of persons belonging to a specific section, an attribute of the task executor may be prescribed as the "task executor." The scheduling supporting apparatus 100 transmits information indicating contents of the task, the scheduled execution time period and so forth to the specific user interface apparatus 200 on the basis of the prescription of the "task executor." The "required time period" indicates a time period as an aid used for execution of the task, and the required time period may be determined, for example, using an average time period used for execution of the task on the basis of achievements in the past. In the example depicted, the "required time period" is prescribed to "four hours." The "execution time limit" indicates a time limit before which the task is to be executed, and, in the example depicted, the execution time limit is set to "August 20, 2014, 5:00 PM." The "scheduled start time" is a scheduled time point at which execution of the task is to be started and the "scheduled end time" is a scheduled time point at which execution of the task is to be ended. As described above, in the example depicted, the "scheduled start time" and the "scheduled end time" for the first task are set to "August 17, 2014, 1:00 PM" and "August 17, 2014, 5:00 PM," respectively.

On the other hand, regarding the second task information, "#2001" is prescribed as the "task ID"; "market trend investigation of newly developed commodity E" as "task name"; "Mr. A" as "task executor"; "three hours" as "required time period"; and "August 18, 2014, 5:00 PM" as "execution time limit." The "scheduled start time" and the "scheduled end time" remain in a non-determined state. Where mediation is to be performed for the two tasks prescribed by the two pieces of task information, the scheduling supporting apparatus 100 first determines an execution order of the two tasks.

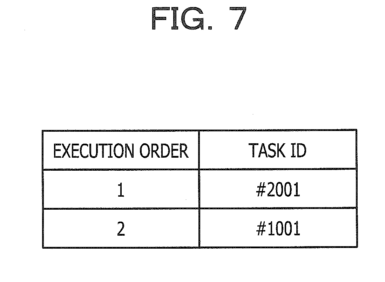

FIG. 7 is a view depicting an execution order of the plurality of tasks determined on the basis of the task information depicted in FIGS. 6A and 6B. The execution order of the task can be determined from various points of view. For example, an execution order can be determined such that a task whose time period to the execution time limit of the task is shorter is executed in priority, or an execution order can be determined such that a task with regard to which a person to whom an artifact of the task is to be presented is a more significant customer is executed in priority. Information to be used when an execution order is determined is referred to as "priority information" and a kind of the information is referred to as "sorting item." Here, a case is described in which the "execution time limit" is the sorting item. The execution time limit for the first task that is the priority information prescribed by the first task information is "August 20, 2014, 5:00 PM" and the execution time limit for the second task that is the priority information prescribed by the second task information is "August 18, 2014, 5:00 PM." In this case, "August 18, 2014, 5:00 PM" that is the execution time limit for the second task is set to an earlier timing than "August 20, 2014, 5:00 PM" that is the execution time limit for the first task. Therefore, it can be decided that the second task has a higher degree of priority (urgency) than the priority (urgency) of the first task, and, as the execution order, the second task is placed at a higher rank while the first task is placed at a lower rank. The scheduled execution time period for the second task is set to earlier date and time than the date and time of the scheduled execution time period for the first task.

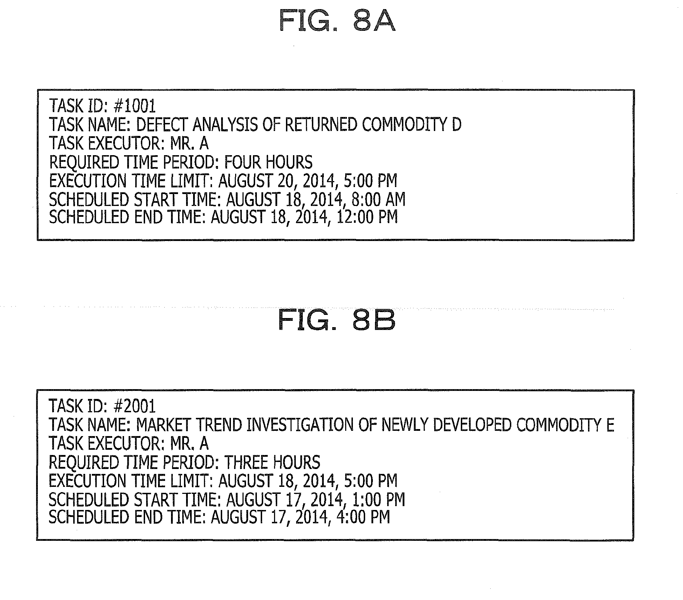

FIGS. 8A and 8B depict contents of the two pieces of task information in which a scheduled execution time period is determined on the basis of the execution order of the tasks depicted in FIG. 7. Note that the following description is given assuming that, in the example depicted, mediation relating to the two tasks is performed on August 17, 2014, 12:00 PM. FIG. 8A depicts contents of the first task information and FIG. 8B depicts contents of the second task information. As depicted in FIG. 8B, for the second task whose rank in the execution order is higher, the scheduled start time is set to "August 17, 2014, 1:00 PM" and the scheduled end time is set to "August 17, 2014, 4:00 PM." Further, as depicted in FIG. 8A, for the first task whose rank in the execution order is lower, the scheduled start time is set to "August 18, 2014, 8:00 AM" later than the scheduled end time for the second task and the scheduled end time is set to "August 18, 2014, 12:00 PM." For the first task, since the scheduled start time and the scheduled end time are set already to "August 17, 2014, 1:00 PM" and "August 17, 2014, 5:00 PM" before mediation, respectively, the scheduled start time and the scheduled end time are changed according to mediation with the second task. The first task information depicted in FIG. 8A and the second task information depicted in FIG. 8B are collectively referred to as first schedule. The first schedule is transmitted from the scheduling supporting apparatus 100 to the user interface apparatus 200 operated by the task executor, for example, on the basis of the information of the task executor indicated by the first schedule.

Now, details of a procedure for creating a different schedule when the task executor does not agree with contents of the first schedule determined by mediation are described.

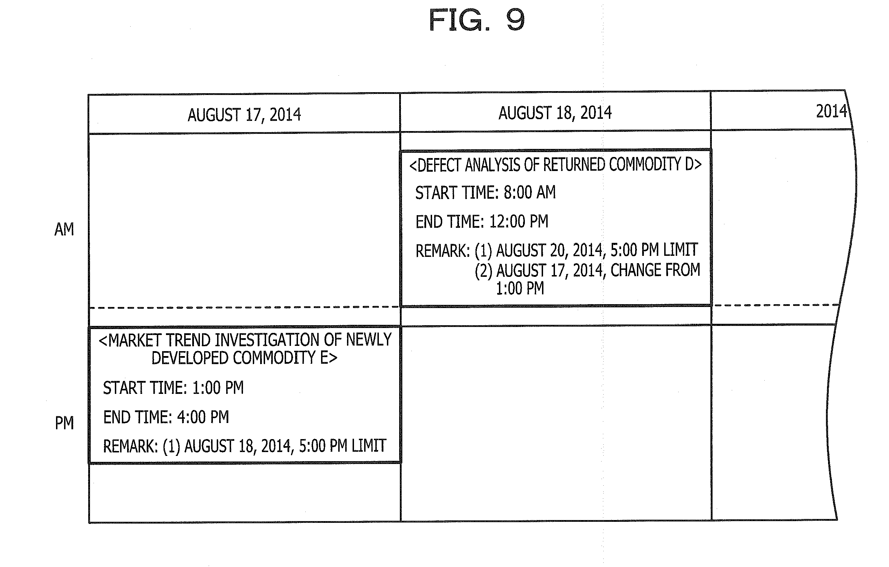

FIG. 9 is a view exemplifying a timetable displayed on a display device of a user interface apparatus and indicating contents of the first schedule. The user interface apparatus and the display device described with reference to FIG. 9 may be the user interface apparatus 200 and the display device 260 depicted in FIGS. 1 and 3, respectively. In this manner, the task executor can recognize the contents of the first schedule created by the mediation performed by the scheduling supporting apparatus 100 using the user interface apparatus 200. It is to be noted that, although an example in which contents of the first schedule are displayed on the display device 260 is described here, a notification of the schedule contents may be issued to the task executor by sound through the sound outputting device 280. Further, in the example of FIG. 9, in addition to information relating to task execution such as "task name," "start time" and "end time," also "execution time limit" is displayed as "remark." Consequently, the task executor can recognize the execution time limit of each task, and can consider, for example, whether to agree with the contents of the first schedule or to request presentation of a different schedule. Further, for the first task, "change from August 17, 2014, 1:00 PM" may be displayed in the field for the "remark." By the display, the task executor can recognize that it was scheduled that the first task was to be started at "August 17, 2014, 1:00 PM" and that the schedule contents displayed at present are obtained as a result of change of the schedule.

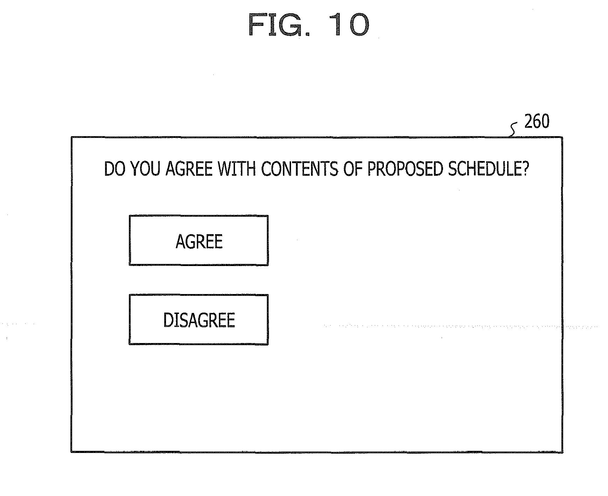

FIG. 10 is a view depicting an example of a screen image that is used when a response regarding whether or not the task executor agrees with the contents of the first schedule is fed back to a scheduling supporting apparatus and is displayed on a display device. The scheduling supporting apparatus and the display device described with reference to FIG. 10 may be the scheduling supporting apparatus 100 and the display device 260 depicted in FIGS. 1 and 3, respectively. Buttons to be used when the task executor selects "agree" or "disagree" with the contents of the first schedule created by the scheduling supporting apparatus 100 are set to the display device 260. When the task executor agrees with the contents of the first schedule presented from the scheduling supporting apparatus 100, the task executor would select the button of "agree" provided on the display device 260. However, when the task executor does not agree with the contents of the first schedule, the task executor would select the button of "disagree." The task executor can select the "disagree," for example, in a case in which, although the execution time limit of the first task is set to "August 20, 2014, 5:00 PM," it is expressed to a customer that a cause of failure is clarified before the set execution time limit or in another case in which basic information collection relating to the second task is completed already. Consequently, the task executor can request creation and presentation of a different schedule to the scheduling supporting apparatus 100.

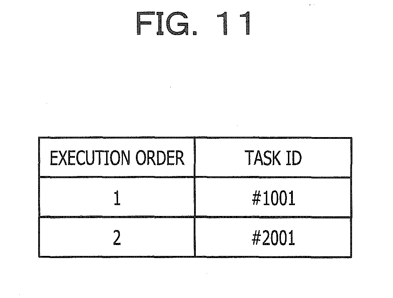

FIG. 11 is a view illustrating a changed execution order when the task executor selects "disagreement" with the first schedule. In FIG. 7, the scheduling supporting apparatus 100 compares the execution time limit of the first task and the execution time limit of the second task to set the rank in the execution order of the task whose execution time limit is set to earlier date and time to a higher rank. Then, on the basis of the set execution order, the scheduled start time and the scheduled end time of the two tasks are set such that the task whose rank in the execution order is higher is executed earlier to create the first schedule. If the task executor selects "disagreement" with the first schedule created in such a manner as just described, the scheduling supporting apparatus 100 changes the execution order of the two tasks. Here, the execution order is changed such that the rank of the first task is placed higher than the rank of the second task. However, the execution time limit of each task is not changed.

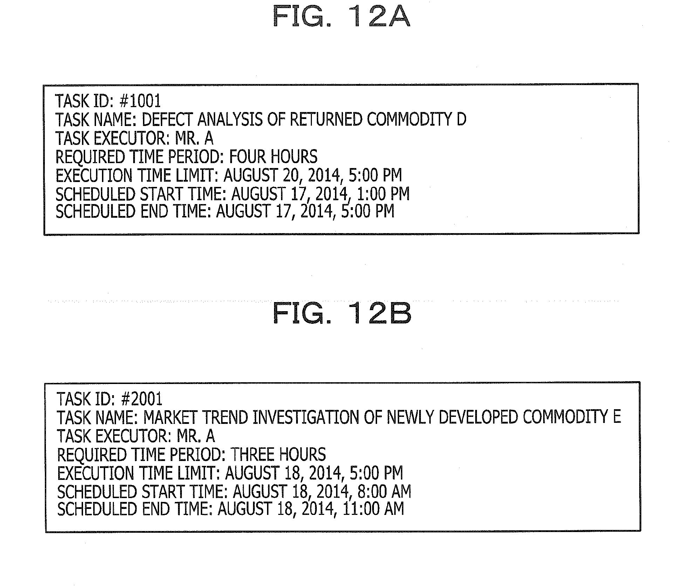

FIGS. 12A and 12B depict contents of the two pieces of task information mediated on the basis of the changed execution order depicted in FIG. 11. The scheduled start time and scheduled end time of the two tasks are mediated and set such that the task whose rank in the execution order is higher is executed earlier than the task whose rank in the execution order is lower. FIG. 12A depicts first task information after change and FIG. 12B depicts second task information after change. In the first task information, "August 17, 2014, 1:00 PM" is prescribed as the scheduled start time for the first task and "August 17, 2014, 5:00 PM" is prescribed as the scheduled end time. Further, in the second task information, "August 18, 2014, 8:00 AM" is prescribed as the scheduled start time of the second task and "August 18, 2014, 11:00 AM" is prescribed as the scheduled end time. A schedule (hereinafter referred to as second schedule) that is different in contents from the first schedule in that the scheduled start time and scheduled end time of the first task and the second task are changed is created. The scheduling supporting apparatus 100 transmits the created second schedule to the user interface apparatus 200. The user interface apparatus 200 displays the contents of the second schedule transmitted from the scheduling supporting apparatus 100 on the display device 260. Further, the user interface apparatus 200 displays a screen image for feedback to the contents of the second schedule as depicted in FIG. 10. If the task executor agrees with the contents of the second schedule, then the task executor would select the button of "agree" depicted in FIG. 10. Accordingly, the mediation relating to the scheduling of the two tasks and the re-mediation on the basis of the feedback from the task executor end, and the operation for the schedule creation ends. If the task executor does not agree also with the second schedule, further mediation is performed.

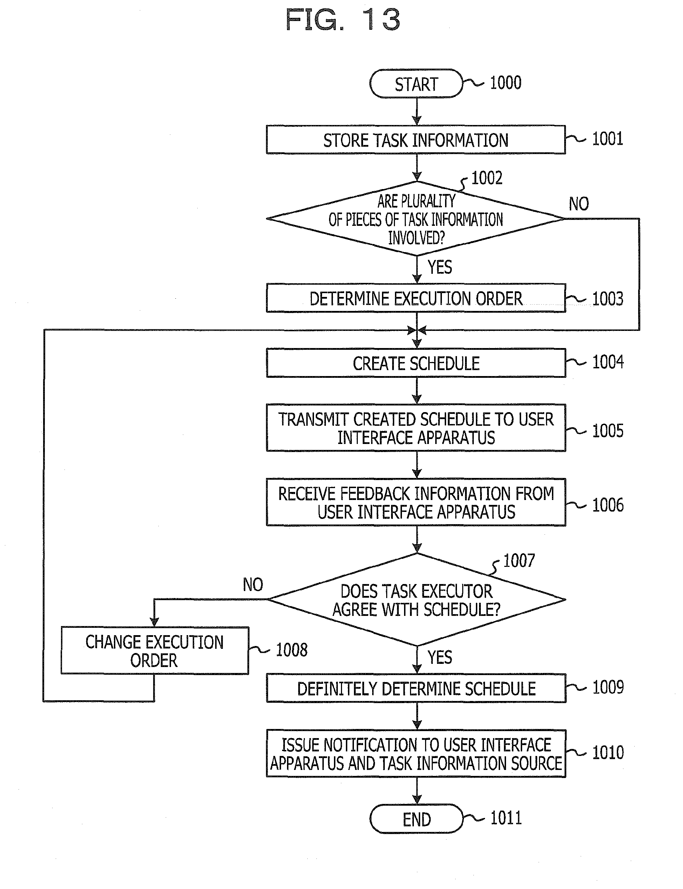

FIG. 13 is a processing flow chart for mediation performed by a processor. The processor described with reference to FIG. 13 may be the processor 110 depicted in FIG. 2. The mediation process is started in process 1000, and the task information storage unit 111 acquires and stores task information in process 1001. In process 1002, the mediation unit 113 decides whether or not a plurality of pieces of task information are stored in the task information storage unit 111 and the schedule storage unit 112. If it is decided in process 1002 that a plurality of pieces of task information are stored, the processing advances to process 1003, but if it is decided that only one piece of task information is stored, then the processing advances to process 1004. In process 1003, the mediation unit 113 refers to contents of the plurality of pieces of task information and determines an execution order of the plurality of tasks prescribed by the plurality of pieces of task information. In process 1004, the mediation unit 113 determines scheduled start time and scheduled end time for each task to create a schedule. If a plurality of pieces of task information are involved, then the mediation unit 113 performs, on the basis of the execution order determined in process 1003, mediation among the plurality of tasks so that a task whose rank in the execution order is higher is executed at earlier date and time than the date and time of another task whose rank in the execution order is lower. In process 1005, the user interface apparatus communication unit 114 transmits the created schedule to the user interface apparatus 200. In process 1006, the user interface apparatus communication unit 114 receives feedback information from the user interface apparatus 200. In process 1007, the mediation unit 113 decides whether or not the task executor agrees with the contents of the schedule on the basis of the feedback information. If it is decided in process 1007 that the task executor does not agree with the contents of the schedule, then the processing advances to process 1008. However, if it is decided that the task executor agrees with the contents of the schedule, then the processing advances to process 1009. In process 1008, the mediation unit 113 changes the execution order created in process 1003. After the process 1008, the processing returns to process 1004, and the mediation unit 113 executes the scheduling again on the basis of the changed execution order. Further, in process 1009, the mediation unit 113 definitely determines the contents of the schedule. Then, in process 1010, the user interface apparatus communication unit 114 and the task information source communication unit 115 issue a notification of the decided schedule to the user interface apparatus 200 and the task information source 1, respectively, and the processing ends in process 1010.

In this manner, in the first embodiment, if a plurality of tasks are created, then the scheduling supporting apparatus 100 performs mediation on the basis of priority information included in task information and issues a notification of a resulting schedule to the user interface apparatus 200. The mediation of the plurality of tasks is performed, for example, taking an execution time limit of each task into consideration. If the task executor does not agree with the contents of the schedule, then the scheduling supporting apparatus 100 changes the execution order to create a different schedule and presents the created schedule to the task executor. Therefore, a desire of the task executor is taken into consideration upon definite determination of the schedule. Consequently, a schedule that is more easy to be executed by the task executor or that satisfies the task executor can be created.

It is to be noted that, while the first embodiment is described in regard to an example in which both of the scheduled start time and the scheduled end time of the task are determined in scheduling, only one of the scheduled start time and the scheduled end time may be determined in scheduling. For example, it sometimes is difficult to determine, in scheduling, both of the scheduled start time and the scheduled end time for a task whose required time period is not determined expressly. In such a case as just described, the scheduling supporting apparatus 100 may perform scheduling only for one of the scheduled start time and the scheduled end time.

Further, while the first embodiment is described in connection with an example in which a plurality of pieces of task information are created by the task information sources different from each other, the plurality of pieces of task information may not necessarily be created by a plurality of task information sources independent of each other but a single task information source may create a plurality of pieces of task information.

### <Second Embodiment>

A second embodiment described below is directed to an example of a determination method for an execution order of a plurality of tasks and an operation screen image of a user interface apparatus used by a task executor. The second embodiment is described taking, as an example, a case in which a plurality of management servers individually provided in a plurality of sections different from each other or a plurality of projects different from each other in a company in which Mr. A works create task information that prescribes a task to be executed by Mr. A.

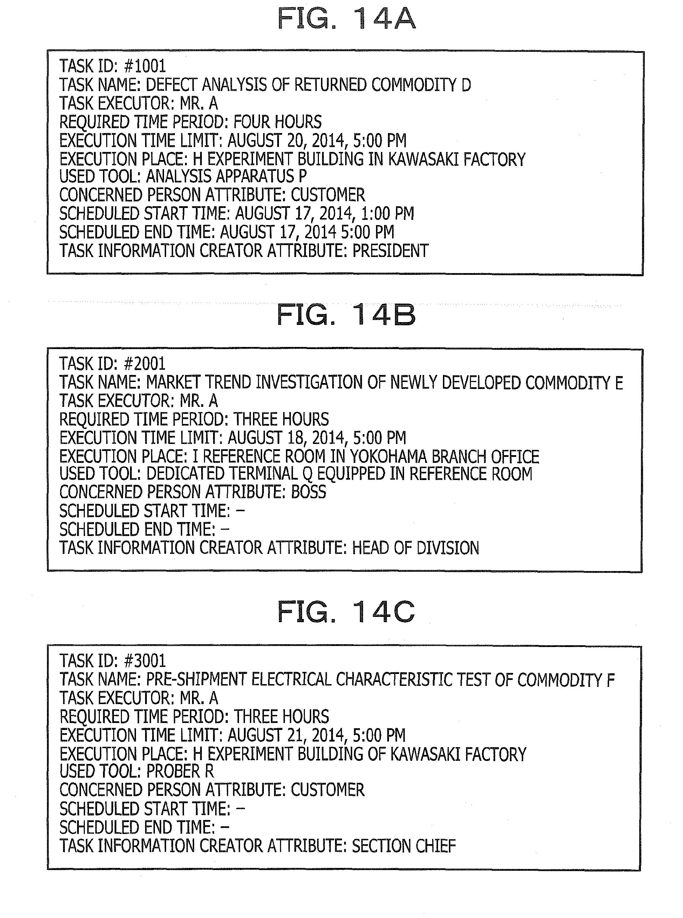

FIGS. 14A to 14C are views exemplifying contents of task information in the second embodiment. FIG. 14A depicts first task information that prescribes "defect analysis of returned commodity D" (first task) created by the task information source 1. FIG. 14B depicts second task information that prescribes "market trend investigation of newly developed commodity E" (second task) created by the task information source 2. FIG. 14C depicts third task information that prescribes "pre-shipment electrical characteristic test of commodity F" (third task) created by the task information source 3. The execution time limit of the task is set to "August 20, 2014, 5:00 PM" for the first task; to "August 18, 2014, 5:00 PM" for the second task; and to "August 21, 2014, 5:00 PM" for the third task. The execution place of the task is set to "H experiment building in KAWASAKI factory" for the first task; to "I reference room in YOKOHAMA branch office" for the second task; and "H experiment building in KAWASAKI factory" for the third task. Further, the used tool when the task is executed is set to "analysis apparatus P" for the first task; to "dedicated terminal Q equipped in reference room" for the second task; and to "prober R" for the third task. Further, the attribute of a concerned person in the task is set to "customer" for the first task; to "boss" for the second task; and to "customer" for the third task. Furthermore, the attribute of the task information creator is set to "president" for the first task; to "head of division" for the second task; and to "section chief" for the third task. When mediation is performed among the three tasks, if the sorting item for determining an execution order is "execution time limit," then the second task has the first priority rank; the first task has the second priority rank; and the third task has the third priority rank. Then, scheduling is performed such that the three tasks are executed in this execution order.

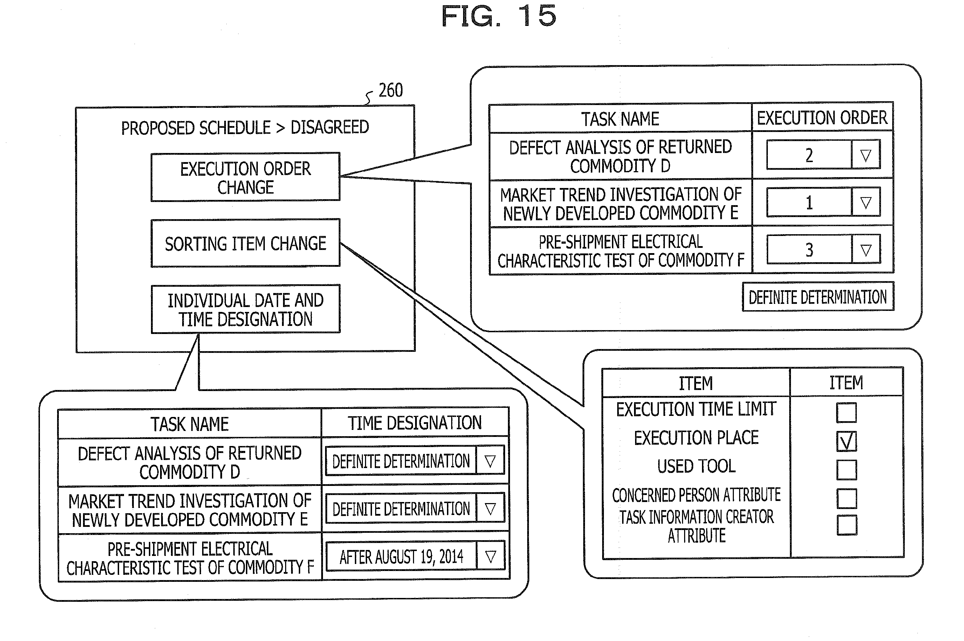

FIG. 15 exemplifies display contents of a display device when the task executor inputs an intention of "disagreement" with the schedule created for the three tasks depicted in FIG. 14 to a user interface apparatus. The display device in FIG. 15 and the user interface apparatus including the display device may be the display device 260 depicted in FIG. 3 and the user interface apparatus 200 depicted in FIG. 1. The contents depicted in FIG. 15 are displayed when the task executor selects the button of "disagree," for example, on the displayed screen image on the display device 260 depicted in FIG. 10. If the task executor does not agree with the schedule contents created by the scheduling supporting apparatus 100, then the task executor may simply issue a notification of disagreement to the scheduling supporting apparatus 100. In this case, since a notification of desired contents of the task executor is not particularly conveyed to the scheduling supporting apparatus 100, a newly created schedule may not satisfy the desire of the task executor. In order to minimize such a situation as just described, in the present embodiment, the task executor would designate or select an own desire in what policy a new schedule is to be created. For example, buttons of "change of execution order," "change of sorting item" and "designation of individual date and time" are displayed on the display device 260. If the button of "change of execution order" is selected, then the task executor can designate an execution order among tasks that are a target of mediation. In the schedule created first by the scheduling supporting apparatus 100, the execution order of the second task is set as the first rank; the execution order of the first task as the second rank; and the execution order of the third task as the third rank. However, the task executor can arbitrarily change the execution order. Further, if the button of "change of sorting item" is selected, then the task executor can specify which one the items of "execution time limit," "execution place," "used tool," "concerned person attribute," "task information creator attribute" and so forth prescribed in the task information is to be used to determine an execution order. For example, if the "execution place" is selected, then scheduling is performed such that, if the execution place of the task is nearer to the place at which the task executor is at the present point of time, then a higher rank in the execution order is set to the execution place or a plurality of tasks whose execution places are near to each other are executed successively. It is to be noted that a detection method for a place at which the task executor is is described in the description of a third embodiment. Further, if the "used tool" is selected, then the used tools of the tasks are scheduled such that a task for which a tool same as the tool that is being used by the task executor at the present point of time is used is executed preferentially to determine the execution order or a plurality of tasks in which the same tool is used are executed successively. The tool being used at the present point of time by the task executor is specified on the basis of prescription contents of task information of a task being executed at the present point of time by the task executor. Further, if the "concerned person attribute" is selected, then scheduling is performed on the basis of an attribute of a concerned person. For example, as a kind of the "concerned person attribute," a "customer," a "boss" and a "colleague" are prescribed. It is assumed that a first priority rank is provided to a task in which the concerned person attribute is prescribed as "customer"; a second priority rank is provided to a task in which the concerned person attribute is prescribed as "boss"; and a third priority rank is provided to a task in which the concerned person attribute is prescribed as "colleague." In this case, scheduling is performed such that the first task and the third task in which the "customer" is prescribed as the concerned person attribute are set to a higher priority rank. Further, if the "task information creator attribute" is selected, then scheduling is performed on the basis of an attribute of a task information creator. For example, as a kind of "task information creator attribute," "president," "head of division" and "section chief" are prescribed. It is assumed that the priority rank is determined such that a first priority rank is provided to a task in which the task information creator attribute is prescribed as "president"; a second priority rank is provided to a task in which the task information creator attribute is prescribed as "head of division"; and a third priority rank is provided to a task in which the task information creator attribute is prescribed as "section chief." In this case, scheduling is performed such that the execution order is set in order of the first task, the second task, and the third task. Further, if the "designation of individual date and time" displayed on the display device 260 is selected, then particular date and time can be designated as the scheduled start time for each task. For example, in the example of FIG. 15, the date and time for the first and second tasks is definitely determined in accordance with contents of the presented schedule, and the date and time for the third task is designated as "after August 19, 2014." The scheduling supporting apparatus 100 executes scheduling in accordance with such an instruction from the user interface apparatus 200 as described above. Consequently, a notification that not only indicates a will that the task executor merely disagrees with the schedule contents but also indicates from what point of view the task executor particularly desires to change the schedule is issued to the scheduling supporting apparatus 100. Consequently, schedule change is performed such that the intention of the task executor is satisfied better.

It is to be noted that the sorting items depicted in the present embodiment are an example to the end and some other contents may be set as the sorting items. Further, also where the task executor does not agree with the proposed schedule contents, the task executor may simply perform only feedback that it does not agree with the schedule contents without not necessarily particularly specifying desired schedule contents.

### <Third Embodiment>

In the first and second embodiments, it is not prescribed at what timing scheduling of a task prescribed by task information is executed after the task information is created. A third embodiment described below is directed to an example in which a condition for executing scheduling of a task is determined and scheduling is performed taking satisfaction of the condition as an opportunity.

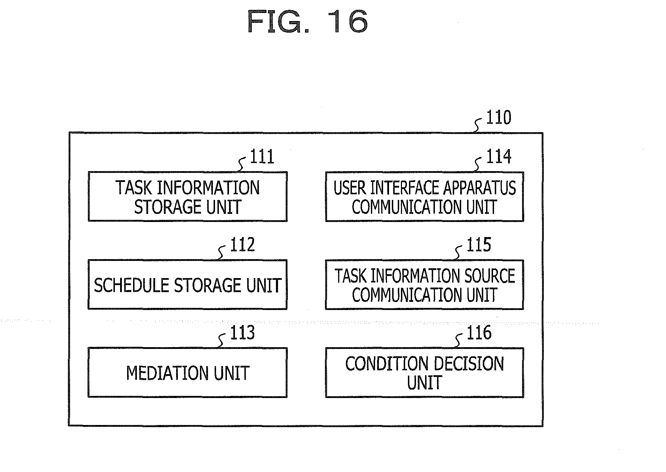

FIG. 16 is a functional block diagram of a processor provided in a scheduling supporting apparatus in a third embodiment. The processor in FIG. 16 and the scheduling supporting apparatus including the processor may be the processor 110 depicted in FIG. 2 and the scheduling supporting apparatus 100 depicted in FIG. 1. The processor 110 executes a computer program stored in the data storage device 140 or the like. The processor 110 thereby functions as a condition decision unit 116 in addition to the task information storage unit 111, the schedule storage unit 112, the mediation unit 113, the user interface apparatus communication unit 114, and the task information source communication unit 115 described hereinabove with reference to FIG. 4. The condition decision unit 116 is a functional block that decides whether or not a scheduling execution condition is satisfied. If it is decided by the condition decision unit 116 that the scheduling execution condition is satisfied, then the mediation unit 113 executes scheduling of a task.

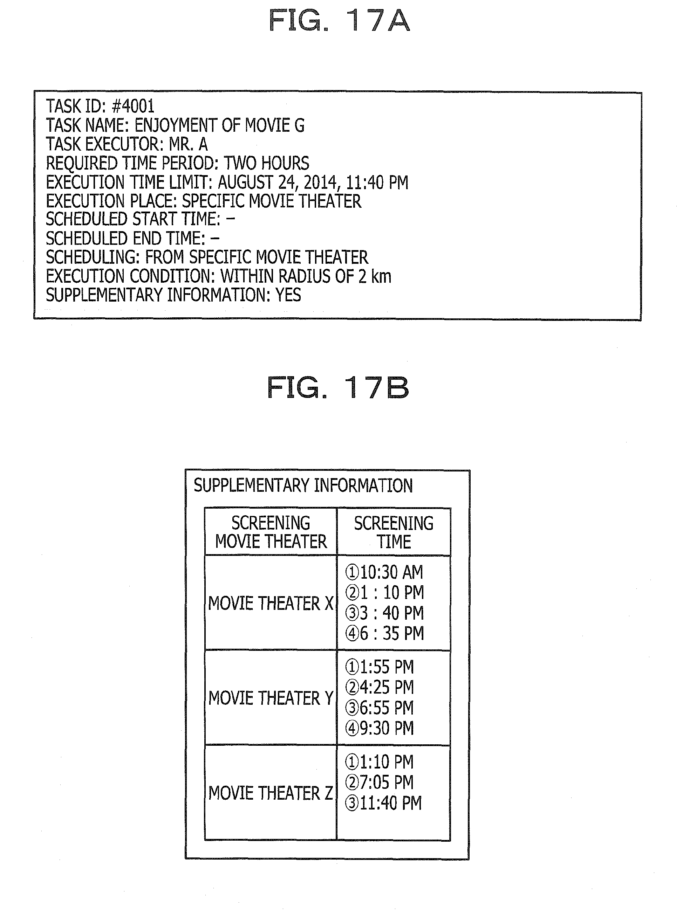

FIGS. 17A and 17B are views exemplifying contents of task information in the third embodiment. FIG. 17A is a view depicting task information to which a scheduling execution condition is added. In the example depicted, it is assumed that the contents of a task are "enjoyment of movie G." It is assumed that a creation source of the task information is a task information source 4 such as a server managed by a film distribution company, a movie performance company or the like. As described in the description of the first embodiment, the task information includes information that specifies task contents such as "task ID," "task name," "task executor," "required time period," "execution time limit," "execution place" and so forth. In the example depicted, in the "execution time limit," screening start time of the last screening of the final exhibition day of a movie is prescribed. It is assumed that the "task executor" of the present task is a person (Mr. A) who buys a ticket sold in advance for the movie G and registers the own user interface apparatus 200 into the task information source 4. Further, the movie G is screen-projected in a plurality of movie theaters and a movie theater in which the movie G is screen-projected or screening time of the movie G are sometimes changed. Therefore, it is assumed that a "specific movie theater" is prescribed as the "execution place" and details of the specific movie theater and details of screening time are retained as supplementary information different from the task information in the task information source 4. FIG. 17B is a view depicting an example of supplementary information. It is to be noted that, though not depicted in FIG. 17B, the supplementary information may include longitude information and latitude information as positional information of each movie theater.

"Scheduling execution condition" is prescribed in the task information depicted in FIG. 17A. In the example depicted, as the "scheduling execution condition," a condition of "within a radius of 2 km from a specific movie theater" is prescribed. This signifies that it is a condition for execution of scheduling that the user interface apparatus 200 of the task executor exists in a range within 2 km from the position of a movie theater specified by the supplementary information.

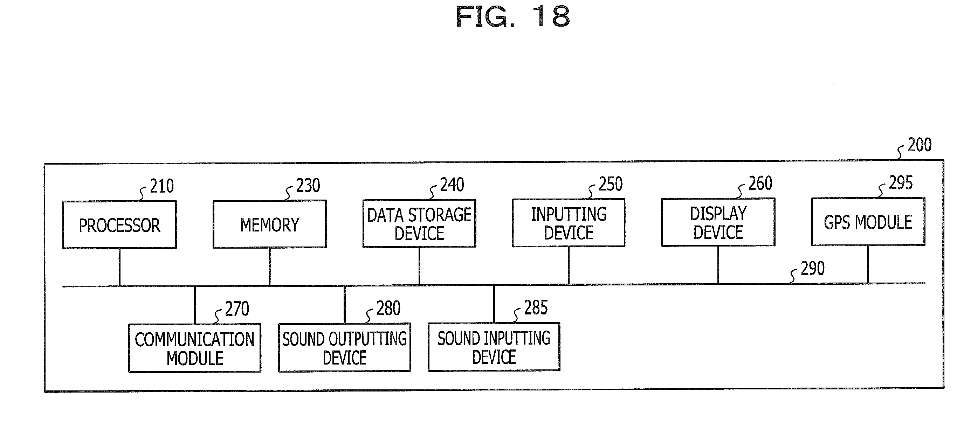

FIG. 18 is a block diagram depicting a hardware configuration of a user interface apparatus in the third embodiment. The user interface apparatus in FIG. 18 may be the user interface apparatus 200 in FIG. 1. In addition to the hardware configuration of the user interface apparatus 200 depicted in FIG. 3, the user interface apparatus 200 includes a global positioning system (GPS) module 295 as a position measurement unit. Consequently, the scheduling supporting apparatus 100 can acquire position information of the user interface apparatus 200. It is to be noted that the GPS module 295 is an example of a device configured to acquire position information of the user interface apparatus 200, and some other device may be used as the GPS module 295.

Referring back to FIG. 16, the condition decision unit 116 decides whether or not the scheduling execution condition is satisfied on the basis of a relationship between the position of the user interface apparatus 200 and the position of the specific movie theater. If it is decided that the scheduling execution condition is satisfied, then the condition decision unit 116 issues a notification to the mediation unit 113 and the mediation unit 113 performs scheduling. When the mediation unit 113 performs the scheduling, screening time for each screening theater which is supplementary information of the task information is referred to set, for example, screening start time of a movie closest to the current time as the scheduled start time of the task. When the task executor who buys a ticket sold in advance of a movie in this manner passes in the proximity of the specific movie theater, scheduling is automatically performed for the task of movie enjoyment. Therefore, the task executor can enjoy the movie G at a suitable timing. Naturally, when there is some other task, for example, when a different task is scheduled already at the screening time of the movie G, the scheduling supporting apparatus 100 determines an execution order between the task of the movie enjoyment and the different task and performs mediation and then performs scheduling for each task. Further, the created schedule contents are transmitted to the user interface apparatus 200 and, if the task executor does not agree with the schedule contents, then the scheduling supporting apparatus 100 creates a different schedule.

In this manner, in the third embodiment, the task information includes a condition for execution of scheduling and scheduling is executed when the scheduling execution condition is satisfied. Therefore, a task can be placed on a schedule at a suitable timing. While the present embodiment described is directed to an example in which scheduling is performed when the task executor comes near to a movie theater, a situation that the number of days before the last day of the screening period of a movie is ten days or a like situation may be prescribed as an execution condition for scheduling.

### <Fourth Embodiment>

A fourth embodiment is directed to an example in which, where a plurality of tasks that become a target of mediation include a task for which scheduling is performed already and scheduled start time and scheduled end time are determined, an inquiry about whether or not the schedule of the task is changeable is issued to a task information source.

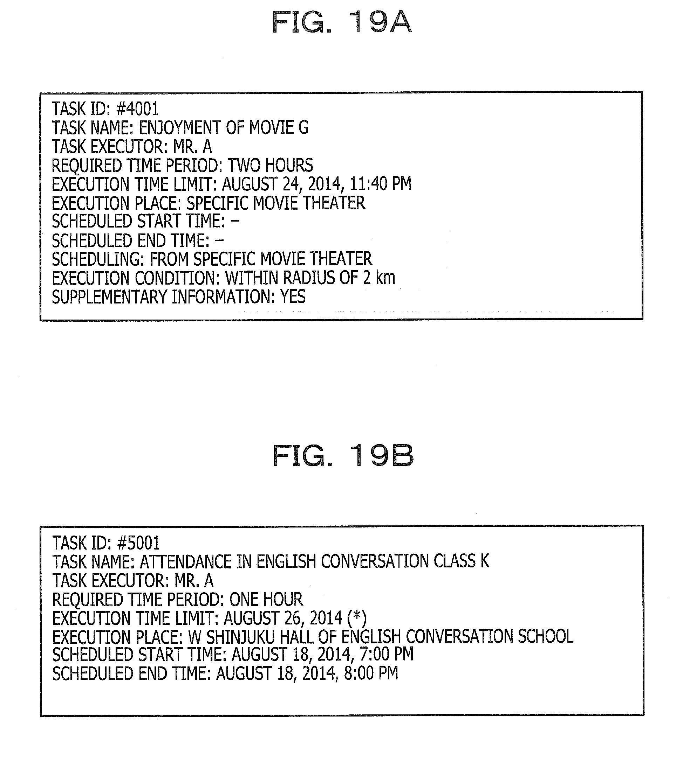

FIG. 19A is a view depicting an example of task information of a task (fourth task) of "enjoyment of movie G" and FIG. 19B is a view depicting an example of task information of a task (fifth task) of "attendance in English conversation class K." The fourth task is of task information having the same contents as contents of the task information depicted in FIG. 17A, and it is assumed that the task information source of the fourth task is the task information source 4 that is a server managed by a film distribution company or a movie performance company. If the user interface apparatus 200 of the task executor is positioned within 2 km from the specific movie theater, then scheduling for the fourth task is executed. The execution time limit for the fourth task is set to start time of the last screening of the final exhibition day of the movie, in the example depicted, to August 24, 2014, 11:40 PM.

On the other hand, the task information source of the fifth task is a task information source 5 that is a reservation server managed by an English conversation school W. Scheduled start time and scheduled end time are determined already for the fifth task. This is a case in which, for example, reservation is completed by the task executor as a result of a procedure performed for attendance reservation in the English conversation class K to the task information source 5 that is a reservation server for the English conversation lecture room or a like case. However, it is assumed that, as an agreement of the English conversation school W, the lecture of the class is held by a plural number of times before August 26, 2014 and the reservation can be changed unless the class becomes over capacity. Therefore, the execution time limit for the fifth task is set to August 26, 2014.

Mediation between the fourth task and the fifth task is executed in such a situation as described above. For example, if "execution time limit" is set as a sorting item, then since the priority of the fourth task is higher than priority of the fifth task, there is the possibility that the schedule of the fifth task may be changed. However, in order to change the schedule of the English conversation class K, information is collected in regard to the day and the time zone in which the English conversation school W holds the English conversation class K and in regard to the free seat state in the lecture. In such a case as just described, a flag (*) is created in the field for the execution time limit for the fifth task as depicted in FIG. 19B. Then, if the flag is found, the mediation unit 113 issues an inquiry to the task information source 5 when mediation is to be performed. The contents of the inquiry are for confirmation of a free seat state in the English conversation class K. If there is no free seat in the English conversation class K, then the mediation unit 113 performs mediation such that the schedule contents of the fifth task are fixed so that the schedule of the fifth task is not changed by scheduling of the fourth task. On the contrary, if there is a free seat in the English conversation class K and change of the reservation is possible, then mediation is performed determining that the schedule of the fifth task can be changed. Then, the changed schedule is transmitted to the user interface apparatus 200. In this case, the mediation unit 113 may perform temporary reservation for the English conversation class K in a time zone after the change to the task information source 5 that is a server for the English conversation school W. Then, if the task executor agrees with the changed schedule, then the mediation unit 113 changes the temporary reservation into a genuine reservation. Consequently, the task executor can change the reservation without time for contacting with the English conversation school W.

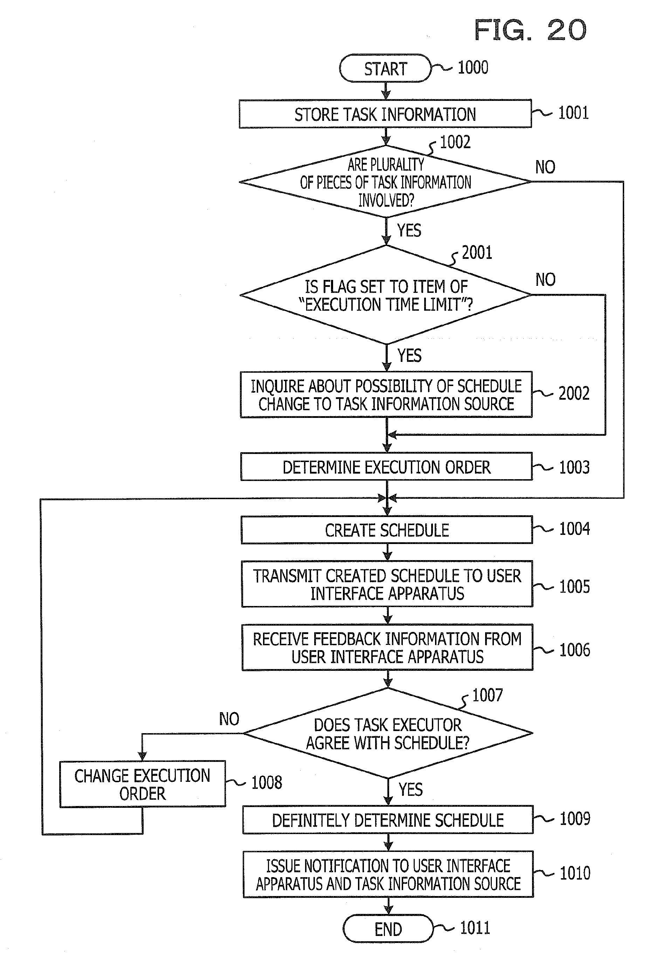

FIG. 20 is a processing flow chart for mediation performed by a processor in the fourth embodiment. The processor in FIG. 20 may be the processor 110 depicted in FIG. 2. FIG. 20 is a processing flow chart for mediation in the fourth embodiment. The mediation process is performed by a processor. Like processes to the processing contents depicted in FIG. 13 are denoted by like reference numerals and overlapping description of the processes is omitted herein. If it is decided in process 1002 that a plurality of pieces of task information are involved, then the mediation unit 113 decides in process 2001 whether or not a flag is set in the field for the "execution time limit" included in the task information. If it is decided in process 2001 that a flag is not set, then the processing advances to process 1003. However, if it is decided in process 2001 that a flag is set, then the processing advances to a process 2002. In process 2002, the mediation unit 113 issues an inquiry about the possibility of schedule change to the task information source. Then, in process 1003, the mediation unit 113 determines an execution order of a plurality of tasks. Along with this, if schedule change is not allowed in process 2002, then a task for which a flag is set in the field for the "execution time limit" is excluded from a mediation target.

### <Fifth Embodiment>

A fifth embodiment described below is directed to a case in which the same task is executed by a plurality of task executors. For example, where a plurality of persons cooperatively execute a single task as in the case of a meeting in a company, a scheduling supporting apparatus performs transmission of a schedule to a plurality of task executors or a mediation process on the basis of feedback information from a plurality of task executors.

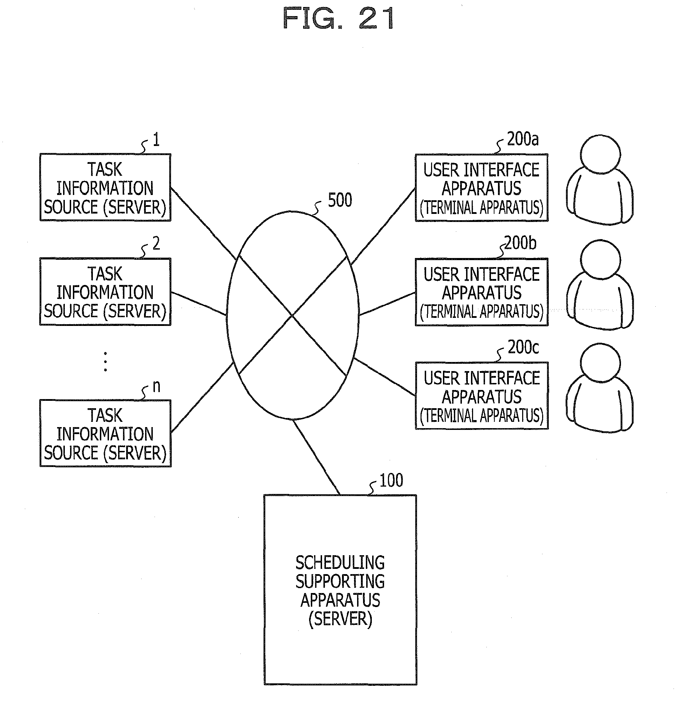

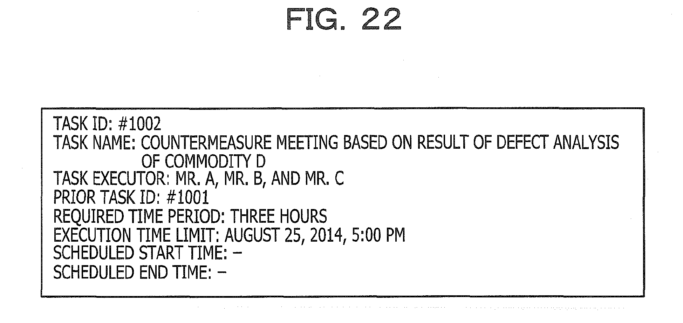

FIG. 21 is a block diagram depicting a system configuration in which a plurality of user interface apparatuses are coupled with a scheduling supporting apparatus through a network. The scheduling supporting apparatus in FIG. 21 may be the scheduling supporting apparatus 100 depicted in FIG. 1. In FIG. 21, the plurality of user interface apparatuses are denoted by reference symbols 200a, 200b, and 200c, and the network is denoted by reference numeral 500. Meanwhile, FIG.22 depicts an example of task information where a plurality of task executors are involved.

In a task (hereinafter referred to as sixth task) prescribed by task information depicted in FIG. 22, the task ID is prescribed to "#1002"; the task name to "countermeasure meeting based on result of defect analysis of commodity D"; the task executor to "Mr. A, Mr. B and Mr. C"; the required time period to "three hours"; and the execution time limit to "August 25, 2014, 5:00 PM." In such a case as just described, the scheduling supporting apparatus 100 performs a mediation process among the task executors to specify a time zone within which all of the task executors of the sixth task can participate to set scheduled start time and scheduled end time of the sixth task. Thereafter, the scheduling supporting apparatus 100 transmits the created schedule to the user interface apparatuses 200a, 200b, and 200c of all of the task executors of the sixth task. Each of the task executors of the sixth task would issue a notification of feedback information regarding the contents of the created schedule to the scheduling supporting apparatus 100 through the user interface apparatuses 200a, 200b, and 200c. If all of the task executors agree with the contents of the created schedule, then the scheduling supporting apparatus 100 definitely determines the schedule. If some of the plurality of task executors do not agree with the contents of the schedule, then the scheduling supporting apparatus 100 performs scheduling again. However, if the task creator decides that the meeting is to be held even if opinions of all task executors do not coincide with each other, then such a condition that "the task can be executed if a majority of task executors can participate" is prescribed by the task information. Consequently, a scheduled execution time period for the task is set even if some of the task executors do not agree with the contents of the schedule.

It is to be noted that, in the present embodiment, information for specifying the "prior task ID" is included in the task information of the sixth task. This is information signifying that execution of the sixth task is performed after some other specific task is executed. For example, in such a case that a plurality of related tasks are successively executed in order to progress one project, the task information may include information for specifying one task and a preceding task or a succeeding task to the one task in order to indicate a coupling state of the tasks. If the schedule of the preceding task is changed, then also the schedule of the succeeding task is changed as occasion demands.

While the plurality of embodiments are described above, several modifications and additional functions of the scheduling supporting apparatus 100 are further described.

### (Storage place of a schedule)

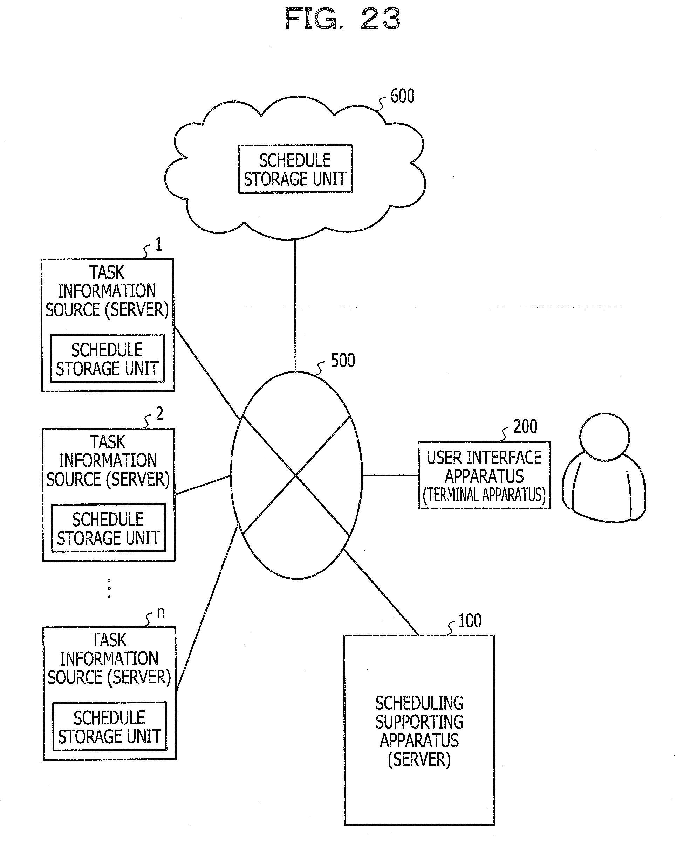

FIG. 23 is a view depicting a variation of an arrangement position of a schedule storage unit. The first embodiment is directed to an example in which the processor 110 or the memory 130 of the scheduling supporting apparatus 100 functions as a schedule storage unit. Further, a region for storing a schedule may be provided in one of the task information sources 1 to n, or a schedule may be stored on a cloud system 600 that can be accessed by the scheduling supporting apparatus 100. In this case, the scheduling supporting apparatus 100 accesses the task information sources 1 to n or the cloud system 600 as occasion demands. Further, a region for storing a schedule may be provided in the user interface apparatus 200 of each task executor. When mediation among tasks is to be performed, the scheduling supporting apparatus 100 acquires a schedule of the task executor from the user interface apparatus 200 and, when an updated schedule is created, a notification of the updated schedule is issued to the user interface apparatus 200.

### (Transmission timing of a schedule to the user interface apparatus 200)

Here, a modification to the timing at which the scheduling supporting apparatus 100 transmits a created schedule to the user interface apparatus 200 is described. The scheduling supporting apparatus 100 may transmit, after scheduling, a created schedule immediately to the user interface apparatus 200. However, the schedule of a task that has a very long time period before scheduled start time of the task, for example, of a task whose execution is scheduled later by one year or more, may not be important information to the task executor. Therefore, the scheduling supporting apparatus 100 may perform such control as not to transmit information regarding a task that has scheduled start time later by a very long interval of time from the present point of time such as, for example, by three months or more to the user interface apparatus 200. In other words, the scheduling supporting apparatus 100 may transmit a schedule to the user interface apparatus 200 at a point of time at which the time period before the scheduled execution start time of the task reaches a given time period and may perform re-mediation or definite determination of the schedule on the basis of feedback of the task executor.

Further, the scheduling supporting apparatus 100 may not transmit all contents of a created schedule to the user interface apparatus 200 at the same timing. The scheduling supporting apparatus 100 may transmit the schedules successively and selectively to the user interface apparatus 200, for example, beginning with the schedule of a task whose scheduled start time is approached by the present time.

### (Task information source)

For the task information sources 1 to n, a server that executes a BPM, an electronic schedule apparatus that is used personally or allows inputting cooperatively by a plurality of persons, an electronic action item list apparatus in which tasks to be executed are listed and electrically stored or a like apparatus can be used.

### (Hardware configuration)

The first to fifth embodiments described hereinabove is directed to an example in which the task information sources 1 to n and the user interface apparatus 200 are provided independently of the scheduling supporting apparatus 100 as hardware. However, the task information sources 1 to n and the user interface apparatus 200 may be implemented by an integral hardware configuration with the scheduling supporting apparatus 100. For example, the task information sources 1 to n themselves may perform mediation among a plurality of tasks and may transmit a created schedule to the user interface apparatus 200. Further, the inputting device 150 and the display device 160 of the scheduling supporting device 100 may be caused to function as a user interface with the task executor. In this case, the task executor confirms contents of a schedule of a task using the display device 160 and inputs feedback information corresponding to the schedule contents using the inputting device 150. Further, a function equivalent to the function of the scheduling supporting apparatus 100 may be included in the user interface apparatus 200 such that the user interface apparatus 200 acquires task information from the task information sources 1 to n and performs mediation. Further, the task executor may input a task created by the task executor itself to the user interface apparatus 200 such that the user interface apparatus 200 executes mediation. In this case, the overall system depicted in FIG. 1 is implemented by the user interface apparatus 200.

### (Alarm function)

In the first to fifth embodiments, the scheduling supporting apparatus 100 transmits the definitely determined schedule to the user interface apparatus 200. However, the task executor may not always confirm schedule contents using the user interface apparatus 200, and may sometimes forget that a certain task is to be started at a given point of time. Therefore, at a time point at which the scheduled start time of the task comes near, the scheduling supporting apparatus 100 issues a notification that the scheduled start time of the task comes near to the user interface apparatus 200. The user interface apparatus 200 urges the task executor to pay attention, for example, by outputting alarm sound or the like from the sound outputting device 280. Management that the scheduled start time of the task comes close may be performed not by the scheduling supporting apparatus 100 but by the user interface apparatus 200.

It is to be noted that, also at a point of time at which the alarm is issued, the task executor may transmit feedback information indicating "disagreement" with schedule contents to the scheduling supporting apparatus 100 using the user interface apparatus 200. This is because, even if the task executor agrees with the schedule contents at the point of time at which the schedule is creased, the situation may change at a point of time immediately before the task is executed and the task executor may desire to change the schedule contents. In this case, the scheduling supporting apparatus 100 performs mediation again to create a new schedule.

### (Feedback)

The first to fifth embodiments described above are directed to an example in which feedback information to the scheduling supporting apparatus 100 is selected using the button of "agree," "disagree" or the like displayed on the display device 260 of the user interface apparatus 200. However, also some other method can be applied as the selection method for feedback information. For example, the task executor may input specific sound to the sound inputting device 285 provided in the user interface apparatus 200 such that the processor 110 specifies whether or not the task executor agrees with a schedule by a speech recognition algorithm. According to a different method, for example, the scheduling supporting apparatus 100 acquires a movement situation of the user interface apparatus 200 using the GPS module 295 provided in the user interface apparatus 200. Then, if it can be determined that the user interface apparatus 200 is moving toward the execution place of the task to be executed at the closest time, then the scheduling supporting apparatus 100 decides that the intention of the task executor is "agreement" with schedule contents. On the other hand, if it can be decided that the user interface apparatus 200 is not moving toward the execution place of the task to be executed at the closest time, then the scheduling supporting apparatus 100 decides that the intention of the task executor is "disagreement" with the schedule contents. In this manner, the feedback to the scheduling supporting apparatus 100 may be performed not only by task executor positively inputting the own intention to the user interface apparatus 200 but also on the basis of an act of the task executor detected by the user interface apparatus 200.

It is to be noted that the feedback information may include not only "agreement" and "disagreement" indicated in the embodiments but also information for requesting a change such as "postponement" and "transfer to another person" and information relating to a progress situation of a task such as "start," "interruption," "extension" and "completion." The scheduling supporting apparatus 100 that receives any of the feedback information mentioned above performs re-creation of a schedule or issuance of a notification to the task information sources 1 to n as occasion demands. For example, while a task of movie enjoyment is described in the description of the second embodiment, where "extension" is selected as feedback information to scheduling of the task of the movie enjoyment, the scheduling supporting apparatus 100 performs scheduling using next screening time as the scheduled start time.

### (Mediation Method)

When a schedule is created by performing mediation among a plurality of tasks, a plurality of such schedules that satisfy execution time limits provided for the individual tasks are sometimes created. In this case, the mediation unit 113 may further create a schedule in accordance with references described below. According to one reference, the mediation unit 113 refers to "required time period" of each task and mediates such a schedule that tasks each having a required time period longer than a fixed time period are successively executed is not created. Since there is the possibility that successive execution of tasks for long time periods may increase the fatigue of the task executor, the mediation unit 113 performs scheduling of a plurality of tasks such that the task executor can execute a task for a short time period after a task for a long time period is executed. According to a different reference, the mediation unit 113 avoids such scheduling that tasks whose contents are same in type are successively executed. Since there is the possibility that successive execution of same or similar works may degrade the concentration of the task executor, the mediation unit 113 performs scheduling of a plurality of tasks such that a task of a different type is executed after a task of a certain type is executed. In order to perform such scheduling as just described, such information as "task type" is prescribed in the task information. The task type may include, for example, a work belonging to a type of the physical labor such as "transportation work" or "package work" and another work belonging to a type of the intellectual labor such as "document creation work" or "information retrieval work."

Further, as a task type, information indicating whether or not execution of the task can be performed divisionally in a plural number of times may be described. For example, where the required time period for the task is eight hours, it is a high load to the task executor to continuously execute the task for the long time period of eight hours. However, if execution of the task can be performed divisionally in a plural number of times, then the mediation unit 113 performs scheduling suitably dividing the execution time period for the task. Consequently, improvement of the working efficiency of the task executor can be implemented. In this case, information such as "dividable" is prescribed as a task type in the task information.

Further, as the task type, information indicating whether or not the task executor can execute some other task during execution of the task may be described. For example, in the case of a task that prescribes movement from Osaka to Tokyo utilizing a train, the task executor can execute a task such as document creation using a notebook type PC or the like simultaneously during the movement by train. Therefore, the mediation unit 113 schedules the task of movement and the task of document creation in an overlapping relationship with each other within the same time zone to improve the working efficiency of the task executor. In this case, information such as "coexistence with PC-using task possible" is prescribed as a task type in the task information.

### (Mediation among tasks for which scheduled execution time period is determined already)

Here, a modification to handling of a task in a case in which a plurality of tasks that become a target of mediation include a task for which scheduled start time or scheduled end time is determined as a result of scheduling performed already is described.

As regards a task for which scheduled start time or scheduled end time is determined already, the task executor may be proceeding with the preparation for execution of the task in accordance with the determined schedule. Further, even if a task allows change of the schedule therefor to a later date from a point of view of the execution time limit, the task executor may not desire to change the schedule. Where the task executor does not desire to change a determined schedule in this manner, the task executor would issue a notification that the schedule contents for the particular task are fixed to the scheduling supporting apparatus 100 through the user interface apparatus 200. The scheduling supporting apparatus 100 that receives the notification manages the task as a non-target of the mediation and do not perform change of the schedule for the task even if some other task is created. In this manner, the function for designating a schedule definitely determined already for a specific task as an unchangeable schedule is a function useful for the task executor to manage an own schedule in accordance with an own will.

Further, when scheduled start time for a task whose scheduled start time or the like is determined already comes near, the task may be excluded from a mediation target. By performing exclusion of a mediation target in this manner, it can be suppressed that a schedule is changed at a timing just before the scheduled start time.

### (Hardware configuration of the task information sources 1 to n)

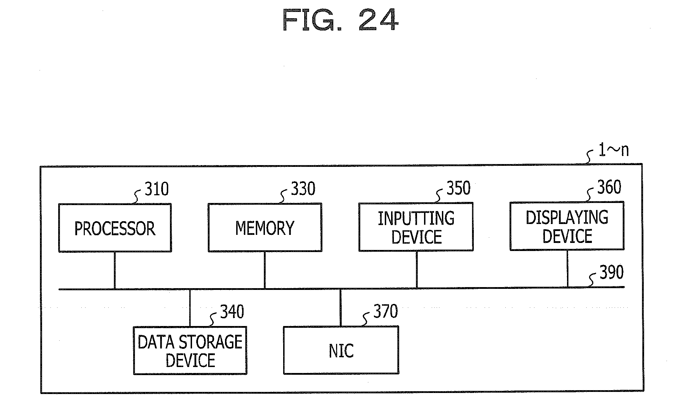

FIG. 24 is a block diagram depicting a hardware configuration of a task information source. Each of task information sources 1 to n includes a processor 310, a memory 330, a data storage device 340, an inputting device 350, a display device 360, an NIC 370 and a bus 390. The processor 310 performs control of the entire task information sources 1 to n, a data process, a process relating to task information creation and so forth. The processor 310 is an electronic circuit part such as a CPU, an MCU, an MPU, a DSP or an FPGA. The memory 330 stores data to be used by the processor 310 for performing a given process, data of a result of the data process performed by the processor 310 and so forth therein. The memory 330 is an electronic circuit part including a volatile memory such as a DRAM or an SRAM and a nonvolatile memory such as a mask ROM, a PROM or a flash memory. The data storage device 340 stores a computer program to be executed by the processor 310, data to be used for some other operation of the task information sources 1 to n and so forth therein. The inputting device 350 is a device for performing inputting of data and so forth to the task information sources 1 to n. The inputting device 350 is, for example, a keyboard or a mouse provided on the task information sources 1 to n. The display device 360 is a device for displaying, for example, a result of the process performed by the processor 310 and is, for example, a display unit provided on the task information sources 1 to n. The NIC 370 is a device for performing data communication with some other electronic apparatus or an information processing apparatus such as a server. The data communication may be performed by any of wireless communication and wired communication. The bus 390 functions as a path of data transmission between the devices for coupling the devices including the processor 310, the memory 330, the data storage device 340, the inputting device 350, the display device 360 and so forth with each other.

### [Description of Reference Characters]

- 1 to n: Task information sources
- 100: Scheduling supporting apparatus
- 200 (200a, 200b, 200c): User interface apparatus
- 500: Network
- 110,210,310: Processor
- 130, 230, 330: Memory
- 140, 240, 340: Data storage device
- 150, 250, 350: Inputting device
- 160, 260, 360: Display device
- 170,370: NIC
- 190, 290, 390: Bus
- 270: Communication module
- 280: Sound outputting device
- 285: Sound inputting device
- 295: GPS module
- 111: Task information storage unit
- 112: Schedule storage unit
- 113: Mediation unit
- 114: User interface apparatus communication unit
- 115: Task information source communication unit
- 116: Condition decision unit

## Claims

1. An apparatus, comprising:
a memory; and
a processor coupled to the memory and configured to:
generate a first schedule relating to a plurality of tasks based on a first execution order information of the plurality of tasks prescribed by a plurality of pieces of task information, and
generate a second schedule that relates to the plurality of tasks and includes contents different from contents of the first schedule based on a first notification relating to the first schedule.

2. The apparatus according to claim 1, wherein
the first schedule prescribes at least any one of scheduled a start time, a scheduled end time, and a scheduled execution time period for each of the plurality of tasks,
the second schedule prescribes at least any one of the scheduled start time, the scheduled end time, and the scheduled execution time period for each of the plurality of tasks, and
at least any one of the scheduled start time, the scheduled end time and the scheduled execution time period for the plurality of tasks prescribed by the second schedule is different from the scheduled start time, the scheduled end time and the scheduled execution time period for the plurality of tasks prescribed by the first schedule.

3. The apparatus according to claim 2, wherein the processor is configured to:
set, in the first schedule, the scheduled execution time period for a first task included in the plurality of tasks to time earlier than the scheduled execution time period for a second task included in the plurality of tasks, and
set, in the second schedule, the scheduled execution time period for the second task to time earlier than the scheduled execution time period for the first task.

4. The apparatus according to claim 1, wherein
the plurality of pieces of task information individually include priority information indicating individual priority degrees of the plurality of tasks, and
the processor is configured to determine the first execution order based on the priority information included in the plurality of pieces of task information.

5. The apparatus according to claim 1, wherein
the second schedule is determined based on a second execution order that is an execution order of the plurality of tasks and is different from the first execution order, and
at least any one of the first execution order and the second execution order is determined by selecting, as a sorting item, at least any one of an execution time limit of a task, an execution place of the task, a tool to be used when the task is executed, an attribute of a creator of task information, and an attribute of a concerned person of the task, determined for each of the plurality of tasks.

6. The apparatus according to claim 5, wherein
the first execution order is determined using at least any one of the execution time limit of the task, the execution place of the task, the tool to be used when the task is executed, the attribute of the creator of task information, and the attribute of the concerned person of the task as the sorting item, and
the second execution order is determined using at least any one of the execution time limit of the task, the execution place of the task, the tool to be used when the task is executed, the attribute of the creator of task information, and the attribute of the concerned person of the task as the sorting item, the used one item being same as the item used when the first execution order is determined.

7. The apparatus according to claim 1, wherein the processor is configured to:
transmit the first schedule to an electronic apparatus,
receive the first notification relating to the first schedule from the electronic apparatus, and
transmit the second schedule to the electronic apparatus.

8. The apparatus according to claim 7, wherein
the first notification indicates that a user does not agree with the first schedule, and
the processor is configured to determine the second schedule as a schedule of the plurality of tasks when the processor receives a second notification indicating that the user agrees with the second schedule from the electronic apparatus.

9. The apparatus according to claim 8, wherein the processor is configured to receive the plurality of pieces of task information from an information processing apparatus through a network.

10. The apparatus according to claim 3, wherein the processor is configured to generate a third notification indicating that the scheduled execution time period for the first task is changed, the third notification being generated if, when the first schedule is generated for the second task and the first task after the scheduled execution time period for the first task is determined as a first period, a second period that is the scheduled execution time period for the first task determined by the first schedule is different from the first period.

11. The apparatus according to claim 3, wherein the processor is configured to fix the scheduled execution time period for the first task to a first period to generate the first schedule, the scheduled execution time period being fixed when the first schedule is generated relating to the second task and the first task after the scheduled execution time period for the first task is determined as the first period.

12. The apparatus according to claim 2, wherein the processor is configured to generate a fourth notification indicating that the second schedule does not satisfy the execution time limit, the fourth notification being generated when any of the scheduled end time for the plurality of tasks prescribed by the second schedule is set to a timing later than the execution time limit.

13. A scheduling method comprising:
generating a first schedule relating to a plurality of tasks based on a first execution order information of the plurality of tasks prescribed by a plurality of pieces of task information; and
generating a second schedule that relates to the plurality of tasks and includes contents different from contents of the first schedule based on a first notification relating to the first schedule.

14. The scheduling method according to claim 13, wherein
the first schedule prescribes at least any one of a scheduled start time, a scheduled end time, and a scheduled execution time period for each of the plurality of tasks,
the second schedule prescribes at least any one of the scheduled start time, the scheduled end time, and the scheduled execution time period for each of the plurality of tasks, and
at least any one of the scheduled start time, the scheduled end time and the scheduled execution time period for the plurality of tasks prescribed by the second schedule is different from the scheduled start time, the scheduled end time and the scheduled execution time period for the plurality of tasks prescribed by the first schedule.

15. A program that causes a processor to execute operations, the operations comprising:
generating a first schedule relating to a plurality of tasks based on a first execution order information of the plurality of tasks prescribed by a plurality of pieces of task information; and
generating a second schedule that relates to the plurality of tasks and includes contents different from contents of the first schedule based on a first notification relating to the first schedule.
